(19) Europäisches Patentamt
European Patent Office
Office européen des brevets

(11) EP 1 889 881 A2

(12) EUROPEAN PATENT APPLICATION

(43) Date of publication:
**20.02.2008 Bulletin 2008/08**

(21) Application number: **07001208.3**

(22) Date of filing: **19.01.2007**

(51) Int Cl.:
***C09B 29/00*** *(2006.01)* ***C09B 29/36*** *(2006.01)*
***C09B 33/12*** *(2006.01)* ***C09B 33/24*** *(2006.01)*
***C09B 41/00*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.01.2006 JP 2006011690**

(71) Applicant: **Fujifilm Corporation**
**Minato-ku**
**Tokyo (JP)**

(72) Inventors:
- **Tateishi, Keiichi c/o Fujifilm Corporation Kanagawa (JP)**
- **Sekioka, Tadao c/o Fujifilm Corporation Kanagawa (JP)**
- **Tanaka, Shigeaki c/o Fujifilm Corporation Kanagawa (JP)**

(74) Representative: **Grünecker, Kinkeldey, Stockmair & Schwanhäusser Anwaltssozietät**
**Maximilianstrasse 58**
**80538 München (DE)**

## (54) A method for producing an azo compound

(57) A method for producing an azo derivative, comprising: (a) a step for allowing a diazotization agent, an acid or mixed acid having a Hammett acidity function Ho of -1.00 or less and an amino compound to undergo the reaction; and (b) a step for mixing a diazonium compound prepared solution obtained in the step (a) with a particular compound.

EP 1 889 881 A2

## Description

## Background of the Invention

1. Field of the Invention

This invention relates to a method for producing an azo compound.

2. Description of the Related Art

Various methods have been known for a long time on the synthesis of azo compounds, such as, as described in Shin Jikken Kagaku Koza (New Experimental Chemistry Course) published by Maruzen, vol. 14-III, pp. 1516 - 1534, synthesis by oxidation reaction, synthesis by reduction reaction, synthesis by replacement reaction, synthesis by addition reaction, synthesis by condensation reaction and other synthesis methods. However, in view of the availability of materials, cost, yield and the like, a method in which azo dye compounds are produced by allowing a diazonium compound to undergo azo-coupling reaction with aniline, phenols and the like coupling components is all but the case which is used as the industrial production of the compounds, and this method also has disadvantages such as a danger of causing explosion of diazonium compounds and a low yield depending the kinds of diazonium compounds and coupling components. Illustratively, in the case of a diazonium compounds to which an electron attractive group is bonded, its formation is difficult to effect and it requires a reaction under a strongly acidic condition, so that this method has a great limitation because it cannot be used when a functional group unstable under acidic condition is present. Particularly, since the diazonium compounds of heterocyclic diazoniumcompounds are unstable inmanycases, their synthesis method having a high general usefulness is not known. In addition, also regarding the coupling component, it is known that it can undergo the reaction efficiently by the diazo-coupling method when the position for effecting the coupling reaction is unsubstituted or linked by formyl group, carboxyl group or the like, but it is known also that the dye is hardly formed by a coupling component linked by fluorine atom, chlorine atom, bromine atom or the like halogen atom, aryloxy group, acyloxy group or the like.

Also, as another method, the method described in European Patent No. 545491 A1, European Patent No. 565165 A1 and the like, in which an azo dye compound is synthesized by allowing a sulfonylhydrazine compound to react with a coupling component in a sensitive material, is also known, but similar to the case of the diazonium compounds, the reaction by this method progresses efficiently only when the position for effecting the coupling reaction is unsubstituted or substituted limitedly with formyl group; carboxyl group or the like, and the yield is low also in such a case.

As described in the above, the related-art methods for synthesizing azo-compounds have problems regarding availability of materials, danger of causing explosion, limitation of the application range, frequent case of low yield and the like. The object of the invention is to overcome the aforementioned problems and thereby provide a production method which can synthesize azo dye compounds from materials that can be easily obtained or synthesized, safely under mild reaction conditions and with high yield.

## Summary of the Invention

Taking the aforementioned problems into consideration, the present inventors have conducted intensive studies and found as a result that production of azo compounds can be attained with a high yield by improving the following step (a). In the general diazonium compound production, a diazonium compound is obtained by adding a diazotization agent to a solution or suspension prepared by dissolving or suspending the corresponding amino compound in an acidic solvent, but depending on the amino compound, there is a case in which a diazonium compound cannot be obtained by this method. Though details of the cause of this are not clear, it was found that it is important for improving the yield to [1] completely dissolve the amino compound to be used in the step (a), to [2] stabilize the formed diazonium compound and, in the subsequent step (b) described later, to [3] suspend or dissolve the compound of general formula (1) to be subjected to- the reaction in a solvent and mix it with a diazonium compound prepared solution of the step (a). It was able to solve the aforementioned problems by using a strong acid in the [1] and [2] and using an alcohol or organic acid (this may be a mixed liquid of an alcohol with an organic acid) as the solvent to be used in [3]. In addition, it was found that the yield is improved when the unreacted diazotization agent is removed using a deactivator after the induction into diazonium compound. Further, when the step (b), which is a method for producing an azo compound of the invention, was followed by a heating/stirring step as a step (c), the filterability of the azo compound (crystallized form) during separation from the reaction solution was successfully enhanced. As compared with the method which comprises separating the azo compound (crystallized form) after the step (b), the method which comprises separating the azo compound (crystallized form) from the reaction solution after the step (c) provides a drastic improvement in filterability.

The invention is as follows.

1. A method for producing an azo derivative, comprising: (a) a step for allowing a diazotization agent, an acid or mixed acid having a Hammett acidity function Ho of -1.00 or less and an amino compound to undergo the reaction; and (b) a step for mixing a diazonium compound prepared solution obtained in the step (a) with a compound represented by general formula (1) :

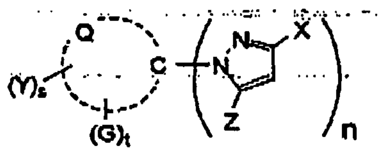

(1)

wherein X each independently represents a hydrogen atom or a substituent group, wherein this substituent group may further have a substituent group,
Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group,
Z represents -OM or $-NR^5R^6$, wherein M represents a hydrogen atom or a metal ion; $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group,
G represents a hydrogen atom or a halogen atom,
Q is an atomic group which constitutes a nitrogen-containing heterocyclic ring together with the carbon atom directly bonding to the pyrazole, and
n, s and t are integers which satisfy the relations of $1 \leq n \leq 3$, $0 \leq s \leq 2$, $0 \leq t \leq 1$ and $n + s + t = 3$.
2. The method for producing an azo compound described in 1, wherein in the general formula (1), the nitrogen-containing heterocyclic ring formed by Q is a 5- or 6-membered aromatic nitrogen-containing heterocyclic ring.
3. The method for producing an azo derivative described in 1 or 2, wherein the general formula (1) is general formula (2):

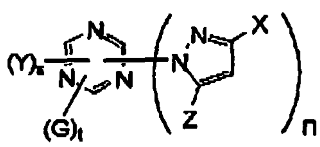

(2)

wherein X each independently represents a hydrogen atom or a substituent group, wherein this substituent group may further have a substituent group,
Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group,
Z represents -OM or $-NR^5R^6$, wherein M represents a hydrogen atom or a metal ion; $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group, and these groups may further have a substituent group,
G represents a hydrogen atom or a halogen atom, and
n, s and t are integers which satisfy the relations of $1 \leq n \leq 3$, $0 \leq s \leq 2$, $0 \leq t \leq 1$ and $n + s + t = 3$.
4. The method for producing an azo compound described in any one of 1 to 3,
wherein in the general formula (1) or (2), n is 2 or 3.
5. The method for producing an azo derivative described in any one of 1 to 4, wherein the general formula (2) is general formula (3):

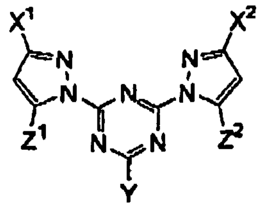

(3)

wherein $X^1$ and $X^2$ each independently represents a hydrogen atom or a substituent group, wherein this substituent group may further have a substituent group,

Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group, and

$Z^1$ and $Z^2$ each independently represents -OM or $-NR^5R^6$, wherein M represents a hydrogen atom or a metal ion, $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group, and these groups may further have a substituent group.

6. The method for producing an azo derivative described in any one of 1 to 5, wherein the amino compound is an aminopyrazole derivative or a salt thereof.

7. The method for producing an azo derivative described in any one of 1 to 6, wherein the aminopyrazole derivative is represented by a general formula (4)

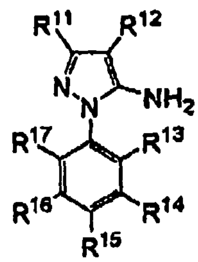

(4)

wherein $R^{11}$ represents a hydrogen atom, an alkyl group, an aryl group, an aryl group, an alkyloxy group, an aryloxy group, an alkylthio group, an arylthio group or a heterocyclic group; $R^{12}$ represents an hygrogen atom or a substituent group having a Hammett substituent constant σp value of 0.20 or more; and $R^{13}$, $R^{14}$, $R^{15}$, $R^{16}$ and $R^{17}$ each independently represents a hydrogen atomor a substituent group, wherein two ormore among $R^{13}$, $R^{14}$, $R^{15}$, $R^{16}$ and $R^{17}$ represent an ionic hydrophilic group or a monovalent group having an ionic hydrophilic group as its substituent group, excluding a case in which $R^{13}$ and $R^{16}$ are both sulfo group at the same time.

8. The method for producing an azo compound described in 7, wherein in the general formula (4), $R^{12}$ is a cyano group, $-SO_2CH_3$ or $-SO_2Ph$.

9. The method for producing an azo derivative described in 7 or 8, wherein $R^{12}$ in the general formula (4) is a cyano group.

10. The method for producing an azo compound described in any one of 1 to 9, wherein at the step (a), the diazotization agent is nitrosylsulfuric acid.

11. The method for producing an azo compound described in any one of 1 to 10, wherein at the (a), the acid is sulfuric acid, phosphoric acid or methanesulfonic acid and the mixed acid is a mixture of the acid and acetic acid.

12. The method for producing an azo compound described in any one of 1 to 11, further comprising a step (c) of stirring the mixed solution obtained at the step (b) under heating.

13. An azo derivative represented by general formula (5), which is obtainable by the method described in any one of 1 to 12:

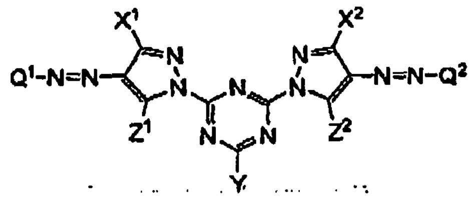 (5)

wherein $Q^1$ and $Q^2$ each independently represents an aromatic hydrocarbon ring group, a non-aromatic hydrocarbon ring group, an aromatic heterocyclic ring or a non-aromatic heterocyclic ring, which may have a substituent group, $X^1$ and $X^2$ each independently represents a hydrogen atom or a substituent group, wherein this substituent group may further have a substituent group,

Y represents $-OR^1$, wherein $R^1$ represents a hydrogen atom or a metal ion, and $Z^1$ and $Z^2$ each independently represents -OM or $-NR^5R^6$, wherein M represents a hydrogen atom or a metal ion and $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group, and these groups may further have a substituent group.

## Detailed Description of the Invention

The following describes embodiments of the invention in detail, though the invention is not restricted thereby.

Firstly, production conditions regarding the step (a) concerned in the invention are described in detail.

When a diazotization agent, an acid or mixed acid having a Hammett's acidity function $H_0$ of -1.00 or less and an amino compound are mixed at the step (a), the amino compound and the diazotization agent are reacted to derive a diazonium compound in the solution. In the present application, the solution containing a diazonium compound- is referred to as "diazonium compound prepared solution". The method for mixing the amino compound and the diazotization agent is not specifically limited. However, the amino compound is preferably added to the solution of a diazotization agent and an acid.

The diazotization agent in the step (a) is used for inducing an amino compound into a diazonium compound and is not limited so far as it has such an effect. Typical as the diazotization agent includes a nitrite (e.g., sodium nitrite, potassium nitrite and the like canbe exemplified), isoamyl nitrite and nitrosylsulfuric acid, more preferably sodium nitrite, potassium nitrite and nitrosylsulfuric acid, most preferably nitrosylsulfuric acid.

The acid used in the step (a) means an acid which can dissolve the amino compound not completely but even if only slightly, and is preferably an acid capable of dissolving the amino compound completely. An inorganic acid (also called mineral acid) and an organic acid can be used as the acid, and hydrochloric acid, phosphoric acid and sulfuric acid can be exemplified as the inorganic acid, of which phosphoric acid and sulfuric acid are preferable, and sulfuric acid is more preferable. The organic acid includes formic acid, acetic acid, propionic acid and methanesulfonic acid, of which acetic acid, propionic acid and methanesulfonic acid are preferable, and acetic acid and methanesulfonic acid are more preferable. In addition, these acids may be used alone or as a mixture. As the mixed acid, phosphoric-acid/acetic acid, sulfuric acid/acetic acid, methanesulfonic acid/acetic acid and acetic acid/propionic acid can be exemplified, of which sulfuric acid/acetic acid, sulfuric acid/propionic acid, sulfuric acid/acetic acid/propionic acid and methanesulfonic acid/acetic acid are preferable, and sulfuric acid/acetic acid is more preferable. Mass ratio of these mixed acid is preferably 1/ (0.1 to 20), more preferably 1/ (0.5 to 10), further preferably 1/ (1 to 10). In addition, this mixed acid may be composed of 3 or more species. For example, sulfuric acid/acetic acid/propionic acid [the mass ratio is preferably within the range of 1/(0.5 to 10)/(0.5 to 10)] and methanesulfonic acid/acetic acid/propionic acid [the mass ratio is preferably within the range of 1/(0.5 to 10) / (0.5 to 10)] can be cited.

When Hammett acidity function Ho is used, the Ho value of the acid or mixed acid at 25˚C is -1.00 or less, preferably -1.05 or less, more preferably -1.10 or less.

As minutely described in "Shin Jikken Kagaku Koza (New Experimental Chemistry Course) Third edition, vol. 1, pp. 213 - 216", the term acidity function as used herein is also called Hammett acidity function and.means a degree showing the capability of an acid solution to provide $H^+$. This is used particularly for measuring pH of a dense acidic solution. When the activity of hydrogen ion H+ is regarded as $a_{H+}$, and the activity coefficient of an electrically neutral weak base B as $f_B$, its concentration as $c_B$, the activity coefficient of $BH^+$ conjugate acid of B as $f_{BH+}$, its concentration as $C_{BH+}$, and the acid dissociation constant as pKa, the acidity function Ho is shown by the following formula :

$$Ho = -\log_{10}(a_H \times f_B/f_{BH+}) = pKa + \log_{10}(c_B/c_{BH+})$$

$$pKa = \log_{10}(a_H \times a_B/a_{BH+})$$

Since $f_B/t_{BH+}$ is constant on many bases, Ho becomes a measure which shows strength of the solution as acid independent of the kind of base. When Ho is negative and the absolute value is large, it is strong as acid. Ho of the solution is determined when $C_B/C_{BH+}$ is calculated by an absorptiometric method using an acid-base indicator of known pKa, such as an strongly acidic solution of 2, 4, 6-trinitroaniline of pKa = -10.10. In addition, pKa of $BH^+$ can be obtained by dissolving other base in a solution having known Ho and calculating $C_B/C_{BH+}$. That is, this is important also for determining strength of a weak base. Ho values of 40, 60 and 80% (weight) sulfuric acid at 25˚C become -2.54, -4.51 and -7.52. When B has a positive or negative charge, acidity functions as $H_+$ and $H_-$ are respectively defined.

Mass ratio of the additive amount of the acid to the amino compound in the step (a) is from 1 to 100 times, more preferably from 2 to 50 times, further preferably from 3 to 25 times. When the mass ratio is smaller than 1, a diazonium compound cannot be derived due to worsening of the mixing ability. On the other hand, when the mass ratio becomes 100 times or more, the productivity becomes poor and uneconomic.

In addition, the additive amount of the diazotization agent based on the amino compound in the step (a), in molar ratio, is from 1.0 to 20 times, more preferably from 1. 0 to 10 times, further preferably from 1.0 to 5 times. The diazotization agent with a molar ratio of at least 1 is necessary for inducing the diazonium compound, but the diazonium compound is degraded when the ratio is 20 times or more due to a side reaction.

In mixing the diazotization agent, acid and amino compound in the step (a), it is carried out preferably at 20˚C or less, more preferably at 15˚c or less, further preferably at 12˚C or less. When the diazo liquid is prepared at 20˚C or more, degradation of the diazotization agent could occur. The stirring time for inducing into the diazonium compound is preferably from 0.3 to 10 hours, more preferably from 0.5 to 5 hours, further preferably from 1 to 3 hours. Complete induction is difficult to attain when it is 0.3 hour or less, and there is a possibility of causing degradation of the diazonium compound when it is 10 hours or more. For mixing, an ordinary agitator is used. The agitator is not specifically limited. Though depending on the production facilities, the rotary speed of agitation is preferably from 30 rpm to 300 rpm, more preferably from 40 rpm to 200 rpm, even more preferably from 50 rpm to 200 rpm. When the agitation speed is 30 rpm or less as calculated in terms of rotary speed, the resulting effect of agitating the diazonium compound prepared solution is deteriorated, making it unlikely that the desired reaction progress can be attained.

The solvent which can be mixed at the step (a) is not-specifically limited so far as the diazonium compound thus derived cannot undergo decomposition. Examples of the miscible solvent employable herein include hydrocarbon-based solvents such as hexane, benzene and toluene, ether-based solvents such as diethyl ether and tetrahydrofurane, ketone-based solvents such as acetone and methyl ethyl ketone, amide-based solvents such as dimethylformamide, dimethylacetamide, pyrrolidone and N-methyl-2-pyrrolidone, dimethyl sulfoxide, sulfolane, and acetonitrile.

The order of addition of the amino compound is not limited so far as the crystallization of amino compound doesn't occur. Referring to preferred order of addition of the amino compound, the addition of the diazotization agent and the acid is followed by the addition of the amino compound. So far as the production of diazonium compound cannot be inhibited by the crystallization of amino compound as previously mentioned, the mixture of the amino compound and the acid may be followed by the addition of the diazotization agent. Alternatively, the diazotization agent and the amino compoundmaybe simultaneously added to the acid.

The pH value of the diazonium compound prepared solution at the step (a) is preferably 7 or less, more preferably 5 or less, more preferably 3 or less. When the pH value of the diazonium compound prepared solution at the step (a) is 7 or more, it is likely that the diazonium compound thus derived can be decomposed.

The amino compound to be used in the step (a) is preferably an aromatic amino compound having a ring which may have a substituent group, and monocyclic and condensed ring counterparts are also included as a ring of the aromatic amino compound. Examples of the aforementioned ring include aromatic hydrocarbon rings, non-aromatic hydrocarbon rings, aromatic heterocyclic rings, and non-aromatic heterocyclic rings. Aromatic heterocyclic amino compounds and non-aromatic heterocyclic amino compounds are preferable, more preferred are the aromatic heterocyclic amino compounds and most preferred are nitrogen-containing 5- to 7-membered aromatic heterocyclic amino compounds. On the aromatic amino compound having a ring which may have a substituent group, preferred examples of the ring include a benzene ring, an imidazole ring, a benzimidazole ring, a pyrazole ring, a benzopyrazole ring, a triazole ring, a thiazole ring, a benzothiazole ring, an isothiazole ring, a benzisothiazole ring, an oxazole ring, a benzoxazole ring, a thiadiazole ring, a pyrrole ring, a benzopyrrole ring, an indole ring, an isoxazole ring, a benzisoxazole ring, a thiophene ring, a benzothiophene ring, a furan ring, a pyrane ring, a benzofuran ring, a pyridine ring, a quinoline ring, an isoquinoline ring, a pyridazine ring, a pyrimidine ring, a pyrazine ring, a cinnoline ring, a phthalazine ring, a quinazoline ring, a quinoxaline ring and a triazine ring. However, the substitution position of amino group, the substituents contained

in the ring and their substitution positions are not limited. On the amino compound having the ring, more preferred examples of the ring include 2-aminopyridine, 3-aminopyridine, 4-aminopyridine, 2-aminopyrimidine, 4-aminopyrimidine, 5-aminopyrimidine, 3-aminopyridazine, 4-aminopyridazine, 2-aminopyrrole, 3-aminopyrrole, 2-aminoimidazole, 4-aminoimidazole, 3-aminopyrazole, 4-aminopyrazole, 5-aminopyrazole, 4-aminotriazole, 4-amino-1,2,3-triazole, 3-amino-1,2,4-triazole, 2-aminoxazole, 4-aminoxazole, 5-aminoxazole, 2-aminoisoxazole, 4-aminoisoxazole, 5-aminoisoxazole, 2-aminothiazole, 4-aminothiazole, 5-aminothiazole, 3-aminoisothiazole, 4-aminoisothiazole, 5-aminoisothiazole, 2-amino-1, 3, 4-thiadiazole, 3-amino-1,2,4-thiadiazole and 5-amino-1,2,4-thiadiazole, and more preferred examples include 5-aminopyrazole, 2-amino-1,3,4-thiadiazole and 5-amino-1,2,4-thiadiazole, and most preferred examples includes 5-aminopyrazole.

In addition, the amino compound to be used in the step (a) may form a dimer connected through L (a divalent connecting group).

The divalent connecting group represented by L includes oxy group -O-, thio group -S-, carbonyl group -CO-, sulfinyl group $-SO_2-$, imino group -NH-, methylene group $-CH_2-$, phenylene group -Ph-, a heterocyclic group and a group formed by combining them, and examples of the group formed by a combination of connecting groups include urea, triazine, 1,3-diaminopropane and 1,4-phenylenediamine.

Especially a compound represented by the following formula (4) is preferred as an amino compound used in the step (a).

Next, the compound represented by the general formula (4) concerned in the invention is described in detail.

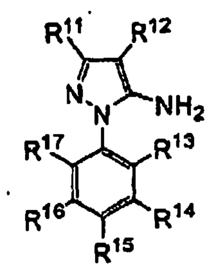

(4)

In the general formula (4) of the invention, $R^{11}$ represents a hydrogen atom, an alkyl group, an aryl group, an alkyloxy group, an aryloxy group, an alkylthio group, an arylthio group or a heterocyclic group.

In the general formula (4) of the invention, $R^{13}$, $R^{14}$, $R^{15}$, $R^{16}$ and $R^{17}$ each independently represent a hydrogen atom or substituent. Two or more of $R^{13}$, $R^{14}$, $R^{15}$, $R^{16}$ and $R^{17}$ each represent an ionic hydrophilic group or a monovalent group having an ionic hydrophilic group as a substituent, with the proviso that the case where $R^{13}$ and $R^{16}$ are a sulfo group at the same time is excluded.

The general formula (4) will be further described hereinafter.

$R^{11}$ represents a hydrogen atom, alkyl group, aryl group, alkyloxy group, aryloxy group, alkylthio group, arylthio group or heterocyclic group. $R^{11}$ is preferably a hydrogen atom or alkyl group, more preferably a hydrogen atom or $C_1$-$C_4$ straight-chain or branched alkyl group, particularly preferably hydrogen atom.

$R^{12}$ represents a hydrogen atom or a substituent having a Hammett's substituent constant σp value of 0.20 or more. Specific examples of the group $R^{12}$ having a Hammett's substituent constant σp value of 0.20 or more include acyl groups, acyloxy groups, carboxyl groups, carbamoyl groups, alkoxycarbonyl groups, aryloxycarbonyl groups, cyano groups, nitro groups, dialkylphosphono groups, diarylphosphono groups, diarylphosphinyl groups, alkylthio groups, arylthio groups, alkylsulfinyl groups, arylsulfinyl groups, alkylsulfonyl groups, arylsulfonyl groups, sulfonyloxy groups, acylthio groups,sulfamoylgroups, thiocyanate groups, thiocarbonyl groups, halogenated alkyl groups, halogenated alkoxy groups, halogenated aryloxy groups, halogenated alkylamino groups, halogenated alkylthio groups, aryl groups substituted by other substituents having σp value of 0.20 or more, heterocyclic groups, halogen atoms, azo groups, and selenocyanate groups. Preferred among these groups $R^{12}$ are cyano groups, carbamoyl groups, alkoxycarbonyl groups, alkylsulfonyl groups arylsulfonyl groups, and halogen atoms More desirable among these groups $R^{12}$ are cyano groups, alkoxycarbonyl groups, alkylsulfonyl groups, and arylsulfonyl groups. Most desirable among these groups $R^{12}$ are cyano groups, alkylsulfonyl groups, and arylsulfonyl groups. Among these groups $R^{12}$, cyano groups are most desirable.

Now, the Hammett substituent constant σp value as used herein is described. The Hammett's rule is a rule of thumb proposed by L. P. Hammett in 1935 with the aim of quantitatively discussing influence of substituent groups upon the reaction or balance of benzene derivatives, and its pertinence is now broadly recognized. The substituent constant required by the Hammett's rule include σp value and σm value, these values can be found in many general books such as "Lange's Handbook of Chemistry" 12th edition, edited by J.A. Dean, 1979 (McGraw-Hill) and "Kagaku-no Ryoiki (Field of Chemistry" a special issue, No. 122, pp. 96 - 103, 1979 (Nanko-do). In this connection, each substituent group

is restricted by the Hammett substituent constant σp or described based thereon in the invention, but this does not mean that the invention is effected only when the substituent groups are limited to those which have the known values by references, which can be found in the aforementioned books, and it is needless to say that substituent groups considered to be within the measuring range based on the Hammett's rule are included therein even when the values cannot be found in references. In the invention; the σp value is used by such a meaning.

$R^{13}$, $R^{14}$, $R^{15}$, $R^{16}$ and $R^{17}$ each independently represent a hydrogen atom or substituent. Preferred examples of the substituent include halogen atoms, alkyl groups, aryl groups, cyano groups, carbamoyl groups, alkylsulfonyl groups, arylsulfonyl groups, alkoxycarbonyl groups, arylcarbonyl groups, and ionic hydrophilic groups. More desirable among these substituents are halogen atoms, cyano groups, alkylsulfonyl groups, arylsulfonyl groups, alkoxycarbonyl groups, arylcarbonyl groups and ionic hydrophilic groups. Most desirable among these substituents are ionic hydrophilic groups. Two or more of $R^{13}$, $R^{14}$, $R^{15}$, $R^{16}$ and $R^{17}$ each represent an ionic hydrophilic group, with the proviso that the case where $R^{13}$ and $R^{16}$ are a sulfo group at the same time is excluded. Preferred examples of the ionic hydrophilic group include carboxyl groups, sulfo groups, phosphono groups, and quaternary ammonium groups. More desirable among these ionic hydrophilic groups are carboxyl groups and sulfo groups, particularly preferably carboxyl groups. In the case where $R^{13}$, $R^{14}$, $R^{15}$, $R^{16}$ and $R^{17}$ each are a carboxyl group, sulfo group or phosphono group, they may be in the form of salt. Examples of the counter ion constituting the salt include ammonium ions, alkaline metal ions (e.g., lithium ion, sodium ion, potassium ion, preferably lithium ion and potassium ion), alkaline earth metal ions (e.g., beryllium ion, magnesium ion, calcium ion, preferably magnesium ion), and organic cations (e.g., $^{+}NH(C_2H_5)_3$, tetramethylammonium ion, tetramethyl guanidium ion, tetramethylphosphonium ion, preferably $^{+}NH(C_2H_5)_3$). Preferred among these counter ions are ammonium ions and alkaline metal ions, more preferably alkaline metal ions.

Summarizing the foregoing contents, the general formula (4) of the invention preferably comprises the following constitutions (a) to (c) in combination.

(a) $R^{11}$ represents a hydrogen atom, alkyl group, aryl group, alkyloxy group, aryloxy group, alkylthio group, arylthio group or heterocyclic group. $R^{11}$ is preferably a hydrogen atom or alkyl group, more preferably a hydrogen atom or $C_1$-$C_4$ straight-chain or branched alkyl group, particularly preferably hydrogen atom.

(b) $R^{12}$ represents a hydrogen atom or a substituent having a Hammett's substituent constant σp value of 0.20 or more. Specific examples of the group $R^{12}$ include cyano groups, carbamoyl groups, alkoxycarbonyl groups, alkylsulfonyl groups, arylsulfonyl groups, and halogen atoms. Preferred among these groups $R^{12}$ are cyano groups, alkoxycarbonyl groups, alkylsulfonyl groups, arylsulfonyl groups, and halogen atoms. More desirable among these groups $R^{12}$ are cyano groups, alkoxycarbonyl groups, alkylsulfonyl groups, and arylsulfonyl groups. Most desirable among these groups $R^{12}$ are cyano groups, alkylsulfonyl groups and arylsulfonyl groups. Among these groups $R^{12}$, cyano groups are most desirable.

(c) $R^{13}$, $R^{14}$, $R^{15}$, $R^{16}$ and $R^{17}$ each independently represent a hydrogen atom or substituent. Preferred examples of the substituent include halogen atoms, alkyl groups, aryl groups, cyano groups, carbamoyl groups, alkylsulfonyl groups, arylsulfonyl groups, alkoxycarbonyl groups, arylcarbonyl groups, and ionic hydrophilic groups. More desirable among these substituents are halogen atoms, cyano groups, alkylsulfonyl groups, arylsulfonyl groups, alkoxycarbonyl groups, arylcarbonyl groups and ionic hydrophilic groups. Most desirable among these substituents are ionic hydrophilic groups.

Preferred examples of the ionic hydrophilic group include carboxyl groups, sulfo groups, phosphono groups, and quaternary ammonium groups, more preferably carboxyl groups and sulfo groups, particularly preferably carboxyl groups. Examples of the counter ion constituting the salt include ammonium ions, alkaline metal ions, and organic cations. Preferred among these counter ions are ammonium ions and alkaline metal ions, more preferably alkaline metal ions. Preferred among these alkaline metal ions are lithium ion, sodium ion, and potassium ion, more preferably lithium ion and potassium ion.

In this connection, regarding the combination of desirable substituent groups of the compound represented by general formula (4), a compound in which at least one of the various substituent groups is the aforementioned desired group is desirable, a compound in which many of the various substituent groups are the aforementioned desired groups is more desirable, and a compound in which all of the substituent groups are the aforementioned desired groups is most desirable.

Among the compounds represented by the general formula (4), a compound represented by the following general formula (6) is further desirable.

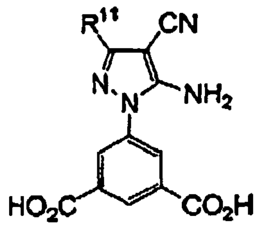

(6)

In this formula, $R^{11}$ represents a hydrogen atom, an alkyl group, an aryl group, an alkyloxy group, an aryloxy group, an alkylthio group, an arylthio group or a heterocyclic group. Preferred as $R^{11}$ is a hydrogen atom, an alkyl group, an alkylthio group, an arylthio group or a heterocyclic group, more preferred is a hydrogen atom or a straight chain or branched chain alkyl group having from 1 to 4 carbon atoms, and particularly preferred is hydrogen atom.

In this connection, regarding the combination of desirable substituent groups of the compound represented by general formula (6), a compound in which at least one of the various substituent groups is the aforementioned desired group is desirable, a compound in which many of the various substituent groups are the aforementioned desired groups is more desirable, and a compound in which all of the substituent groups are the aforementioned desired groups is most desirable.

The following describes the invention in detail based on illustrative examples of 5-aminopyrazole, but the invention is not restricted thereby.

[Compound example 1]

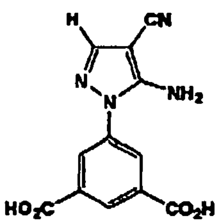

(A - 1)

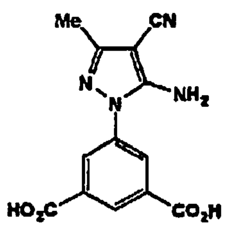

(A - 2)

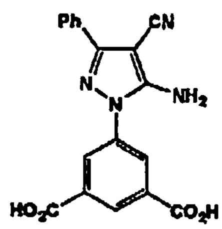

(A -3)

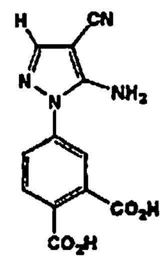

(A - 4)

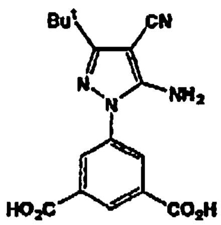

(A - 5)

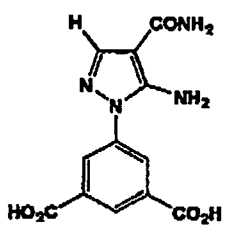

(A - 6)

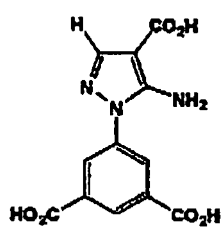

(A -7)

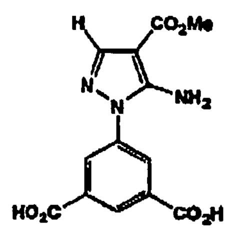

(A - 8)

[Compound example 2]

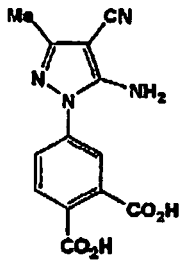
(A - 9)

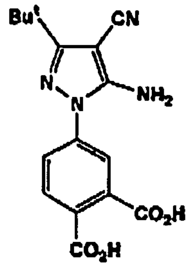
(A -10)

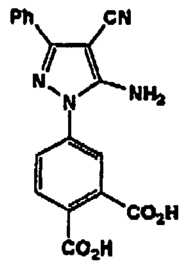
(A - 11)

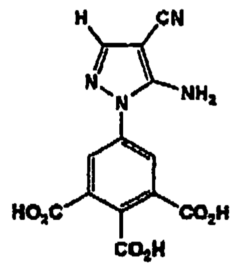
(A - 12)

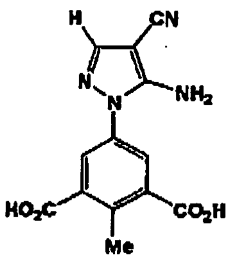
(A - 13)

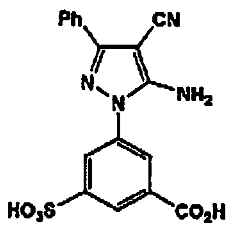
(A - 14)

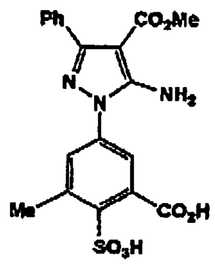
(A - 15)

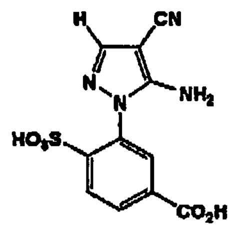
(A - 16)

[Compound example 3]

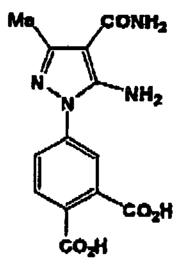
(A - 17)

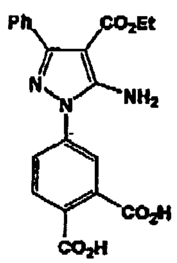
(A - 18)

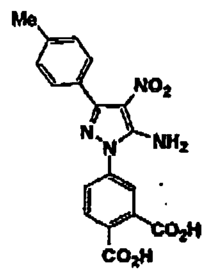
(A -19)

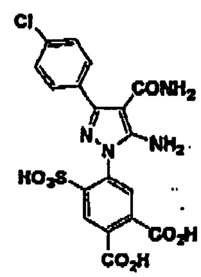
(A - 20)

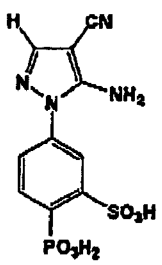
(A - 21)

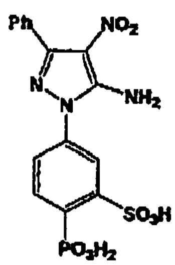
(A - 22)

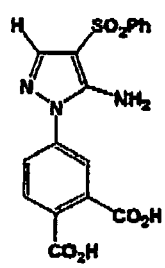
(A -23)

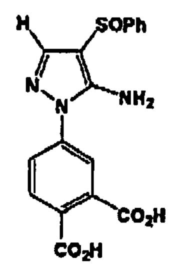
(A - 24)

[Compound example 4]

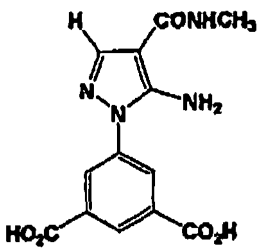
(A - 25)

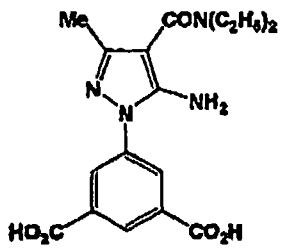
(A - 26)

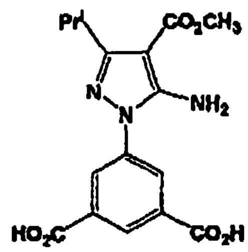
(A - 27)

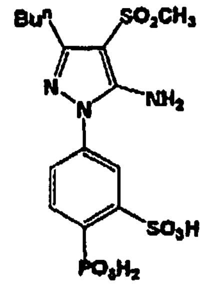
(A - 28)

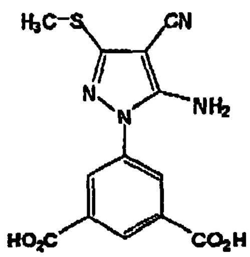
(A - 29)

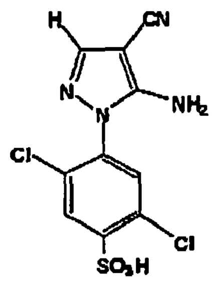
(A - 30)

The substituent groups to be used herein are described. As the substituent groups to be used herein, the following groups can be exemplified.

For example, halogen atom, alkyl group, alkenyl group, alkynyl group, aryl group, heterocyclic group, cyano group, hydroxyl group, nitro group, carboxyl group, alkoxy group, aryloxy group, silyloxy group, heterocyclic oxy group, acyloxy group, carbamoyloxy group, alkoxycarbonyloxy group, aryloxycarbonyloxy group, amino group, acylamino group, aminocarbonylamino group, alkoxycarbonylamino group, aryloxycarbonylamino group, sulfamoylamino group, alkyl or aryl sulfonylamino group, mercapto group, alkylthio group, arylthio group, heterocyclic thio group, sulfamoyl group, sulfo group, alkyl or aryl sulfinyl group, alkyl or aryl sulfonyl group, acyl group, aryloxy carbonylgroup, alkoxycarbonyl group, carbamoyl group, aryl or heterocyclic azo group, imido group, phosphino group, phosphinyl group, phosphinyloxy group, phosphinylamino group, silyl group and ionic hydrophilic group can be cited as examples.

The following describes the substituent groups in detail.

As the halogen atom, for example, fluorine atom, chlorine atom, bromine atom and iodine atom can be cited.

As the alkyl group, straight, branched or cyclic substituted or unsubstituted alkyl groups can be exemplified, and a cycloalkyl group, a bicycloalkyl group, a tricyclo structure having further larger number of ring structures and the like are also included therein. The alkyl group in the substituent groups described in the following (e.g., the alkyl group of alkoxy groups and alkylthio groups) also means an alkyl group of such a general idea. Illustratively, alkyl groups preferably having from 1 to 30 carbon atoms, preferably from 1 to 20 carbon atoms and more preferably from 1 to 15 carbon atoms, excluding substituents, such as methyl group, ethyl group, n-propyl group, isopropyl group, t-butyl group, n-octyl group, eicosyl group, 2-chloroethyl group, 2-cyanoethyl group, 2-ethylhexyl group and the like can be exemplified as the alkyl group, substituted or unsubstituted cycloalkyl groups preferably having from 3 to 30 carbon atoms, preferably from 3 to 20 carbon atoms and more preferably from 3 to 15 carbon atoms, excluding substituents, such as cyclohexyl group, cyclopentyl group, 4-n-dodecylcyclohexyl group and the like can be exemplified as the cycloalkyl group, and substituted or unsubstituted bicycloalkyl groups preferably having from 5 to 30 carbon atoms, more preferably from 5 to 20 carbon atoms and most preferably from 5 to 15 carbon atoms, excluding substituents, namely monovalent groups in which one hydrogen atom is removed from bicycloalkanes having from 5 to 30 carbon atoms, such as bicyclo[1,2,2]heptan-2-yl group, bicyclo[2,2,2]octan-3-yl group and the like can be exemplified as the bicycloalkyl group. Examples

of the substituents include hydroxyl groups, alkoxy groups, cyano groups, halogen atoms, and ionic hydrophilic groups.

As the alkenyl group, straight, branched or cyclic substituted or unsubstituted alkenyl groups can be exemplified, and a cycloalkenyl group and a bicycloalkenyl group are also included therein. Illustratively, substituted or unsubstituted alkenyl groups having from 2 to 30 carbon atoms, preferably from 2 to 20 carbon atoms and more preferably from 2 to 15 carbon atoms, excluding substituents of the alkenyl groups, such as vinyl group, allyl group, prenyl group, geranyl group, oleyl group and the like can be exemplified as the alkenyl group, substituted or unsubstituted cycloalkenyl groups having preferably from 3 to 30 carbon atoms, more preferably from 3 to 20 carbon atoms and most preferably from 3 to 15 carbon atoms, excluding substituents of the cycloalkenyl groups, namely monovalent groups in which one hydrogen atom is removed from cycloalkenes having from 3 to 30 carbon atoms, such as 2-cyclopenten-1-yl group, 2-cyclohexen-1-yl group and the like can be exemplified as the cycloalkenyl group, and bicycloalkenyl groups preferably having from 5 to 30 carbon atoms, more preferably from 5 to 20 carbon atoms and most preferably from 5 to 15 carbon atoms, excluding substituents of the bicycloalkenyl groups, namely monovalent groups in which one hydrogen atom is removed from bicycloalkenes having one double bond, such as bicyclo [2, 2,1] hept-2-en-1-yl group, bicyclo [2, 2, 2] oct-2-en-4-yl group and the like can be exemplified as the bicycloalkenyl group. Examples of the substituents include hydroxyl groups, alkoxy groups, cyano groups, halogen atoms, and ionic hydrophilic groups.

As the alkynyl group, substituted or unsubstituted alkynyl groups having preferably from 2 to 30 carbon atoms, more preferably from 2 to 20 carbon atoms and most preferably 2 to 15 carbon atoms, excluding substituents of the alkynyl groups, such as ethynyl group, propargyl group, trimethylsilylethynyl group and the like can be exemplified. Examples of the substituents include hydroxyl groups, alkoxy groups, cyano groups, halogen atoms, and ionic hydrophilic groups.

Examples of the aralkyl group include substituted and unsubstituted aralkyl groups. The aralkyl group is preferably asubstitutedorunsubstituted aralkylgroup having from 7 to 30 carbon atoms, more preferably from 7 to 20 carbon atoms, evenmore preferably from 7 to 15 carbon atoms, excluding those of substituents. Examples of the aralkyl group include benzyl group and 2-phenethyl group. Examples of the substituents on aralkyl group include hydroxyl groups, alkoxy groups, cyano groups, halogen atoms, and ionic hydrophilic groups.

As the aryl group, substituted or unsubstituted aryl groups having preferably from 6 to 30 carbon atoms, more preferably from 6 to 20 carbon atoms and most preferably from 6 to 15 carbon atoms, excluding substituents of the aryl groups, such as phenyl group, p-tolyl group, naphthyl group, m-chlorophenyl group, o-hexadecanoylaminophenyl group and the like can be exemplified. Examples of the substituents include hydroxyl groups, alkoxy groups, cyano groups, halogen, atoms, and ionic hydrophilic groups.

The heterocyclic group is a monovalent group in which one hydrogen atom is removed from a 5- or 6-membered substituted or unsubstituted aromatic or non-aromatic heterocyclic compound, more preferably a 5- or 6-membered aromatic heterocyclic group having from 3 to 30 carbon atoms, more preferably from 3 to 20 carbon atoms and most preferably from 3 to 15 carbon atoms, excluding substituents of the heterocyclic compounds and for example, 2-furyl group, 2-thienyl group, 2-pyrimidinyl group, 2-benzothiazolyl group and the like can be exemplified. Examples of the substituents include hydroxyl groups, alkoxy groups, cyano groups, halogen atoms, and ionic hydrophilic groups.

As the alkoxy group, substituted or unsubstituted alkoxy groups preferably having from 1 to 30 carbon atoms, more preferably from 1 to 20 carbon atoms and most preferably from 1 to 30 carbon atoms, excluding substituents of the alkoxy groups, such as methoxy group, ethoxy group, isopropoxy group, t-butoxy group, n-octyloxy group, 2-methoxyethoxy group and the like can be exemplified.

Examples of the substituents include hydroxyl groups, alkoxy groups, cyano groups, halogen atoms, and ionic hydrophilic groups.

As the aryloxy group, substituted or unsubstituted aryloxy groups having preferably from 6 to 30 carbon atoms, more preferably from 6 to 20 carbon atoms and most preferably from 6 to 15 carbon atoms, excluding substituents of the aryloxy groups, such as phenoxy group, 2-methylphenoxy group, 4-t-butylphenoxy group, 3-nitrophenoxy group, 2-tetradecanoylaminophenoxy group and the like can be exemplified. Examples of the substituents include hydroxyl groups, alkoxy groups, cyano groups, halogen atoms, and ionic hydrophilic groups.

As the silyloxy group, substituted or unsubstituted silyloxy groups having preferably from 0 to 20 carbon atoms and more preferably from 0 to 15 carbon atoms, excluding substituents of the silyloxy group, such as trimethylsilyloxy group, diphenylmethylsilyloxy group and the like can be exemplified. Examples of the substituents include alkyl groups, aryl groups, and heterocyclic groups.

As the heterocyclic oxy group, substituted or unsubstituted heterocyclic oxy groups having preferably from 2 to 30 carbon atoms, more preferably from 2 to 20 carbon atoms and most preferably from 2 to 15 carbon atoms, excluding substituents of the heterocyclic oxy groups, such as 1-phenyltetrazole-5-oxy group, 2-tetrahydropyranyloxy group and the like can be exemplified. Examples of the substituents include hydroxyl groups, alkoxy groups, cyano groups, halogen atoms, and ionic hydrophilic groups.

As the acyloxy group, preferably formyloxy group, or substituted or unsubstituted alkylcarbonyloxy groups having from 2 to 30 carbon atoms, excluding substituents or substituted or unsubstituted arylcarbonyloxy groups having

from 6 to 30 carbon atoms, more preferably from 6 to 20 carbon atoms and most preferably from 6 to 15 carbon atoms, excluding substituents, such as acetyloxy group, pivaloyloxy group, stearoyloxy group, benzoyloxy group, p-methoxyphenylcarbonyloxy group and the like can be exemplified. Examples of the substituents include alkyl groups, and aryl groups.

As the carbamoyloxy group, substituted or unsubstituted carbamoyloxy groups having prefer ably from 1 to 30 carbon atoms, more preferably from 1 to 20 carbon atoms and most preferably from 1 to 15 carbon atoms, excluding substituents of the carbamoyloxy group, such as N,N-dimethylcarbamoyloxy group, N,N-diethylcarbamoyloxy group, morpholinocarbonyloxy group, N,N-di-n-octylaminocarbonyloxy group, N-n-octylcarbamoyloxy group and the like can be exemplified. Examples of the substituents include alkyl groups, aryl groups, and heterocyclic groups.

As the alkoxycarbonyloxy group, substituted or unsubstituted alkoxycarbonyloxy groups having preferably from 2 to 30 carbon atoms, more preferably from 2 to 20 carbon atoms and most preferably from 2 to 15 carbon atoms, excluding substituents of the alkoxycarbonyloxy group, such as methoxycarbonyloxy group, ethoxycarbonyloxy group, t-butoxycarbonyloxy group, n-octylcarbonyloxy group and the like can be exemplified. Examples of the substituents include hydroxyl groups, alkoxy groups, cyano groups, halogen atoms, and ionic hydrophilic groups.

As the aryloxycarbonyl group, substituted or unsubstituted aryloxycarbonyloxy groups having preferably from 7 to 30 carbon atoms, more preferably from 7 to 20 carbon atoms and most preferably from 7 to 15 carbon atoms, excluding substituents of the aryloxycarbonyl groups, such as phenoxycarbonyloxy group, p-methoxyphenoxycarbonyloxy group, p-n-hexadecyloxyphenoxycarbonyloxy group and the like can be exemplified. Examples of the substituents include hydroxyl groups, alkoxy groups, cyano groups, halogen atoms, and ionic hydrophilic groups.

The amino group includes alkylamino groups, arylamino groups and heterocyclic amino groups, and preferably, their examples include amino group and substituted or unsubstituted alkylamino groups having from 1 to 30 carbon atoms, preferably from 1 to 20 carbon atoms and most preferably from 1 to 15 carbon atoms, excluding substituents of the amino group or substituted or unsubstituted anilino groups having from 6 to 30 carbon atoms, preferably from 6 to 20 carbon atoms and more preferably from 6 to 15 carbon atoms, excluding substituents of the anilino groups, such as methylamino group, dimethylamino group, anilino group, N-methyl-anilino group, diphenylamino group and the like. Examples of the substituents include alkyl groups, aryl group, heterocyclic groups, hydroxyl groups, alkoxy groups, cyano groups, halogen atoms, and ionic hydrophilic groups.

As the acylamino group, preferably, formylamino group, and substituted or unsubstituted alkylcarbonylamino groups having from 1 to 30 carbon atoms, preferably from 1 to 20 carbon atoms and more preferably 1 to 15 carbon atoms, excluding substituents or substituted or unsubstituted arylcarbonylamino groups having from 6 to 30 carbon atoms, preferably from 6 to 20 carbon atoms and more preferably from 6 to 15 carbon atoms, excluding substituents, such as acetylamino group, pivaloylamino group, lauroylamino group, benzoylamino group, 3,4, 5-tri-n-octyloxyphenylcarbonylamino group and the like, can be exemplified. Examples of the substituents include hydroxyl groups, alkoxy groups, cyano groups, halogen atoms, and ionic hydrophilic groups.

As the aminocarbonylamino group, preferably, substituted or unsubstituted aminocarbonylamino groups having from 1 to 30 carbon atoms, preferably from 1 to 20 carbon atoms and more preferably from 1 to 15 carbon atoms, excluding substituents of the aminocarbonylamino group, such as carbamoylamino group, N,N-dimethylaminocarbonylamino group, N,N-diethylaminocarbonylamino group, morpholinocarbonylamino group and the like can be exemplified. Examples of the substituents include alkyl groups, aryl groups, and heterocyclic groups.

As the alkoxycarbonylamino group; preferably, substituted or unsubstituted alkoxycarbonylamino groups having from 2 to 30 carbon atoms, preferably from 2 to 20 carbon atoms and most preferably 2 to 15 carbon atoms, excluding substituents of the alkoxycarbonylamino group, such as methoxycarbonylamino group, ethoxy carbonylamino group, t-butoxycarbonylamino group, n-octadecyloxycarbonylamino group, N-methyl-methoxycarbonylamino group and the like can be exemplified. Examples of the substituents include hydroxyl groups, alkoxy groups, cyano groups, halogen atoms, and ionic hydrophilic groups.

As the aryloxycarbonylamino group, preferably, substituted or unsubstituted aryloxycarbonylamino groups having from 7 to 30 carbon atoms, preferably from 7 to 20 carbon atoms and most preferably 7 to 15 carbon atoms, excluding substituents of the aryloxycarbonylamino groups, such as phenoxycarbonylamino group, p-chlorophenoxycarbonylamino group, m-n-octyloxyphenoxycarbonylamino group and the like can be exemplified. Examples of the substituents include hydroxyl groups, alkoxy groups, cyano groups, halogen atoms, and ionic hydrophilic groups.

As the sulfamoylamino group, preferably, substituted or unsubstituted sulfamoylamino groups having from 0 to 30 carbon atoms, preferably from 0 to 20 carbon atoms and most preferably 0 to 15 carbon atoms, excluding substituents of the sulfamoylamino groups, such as sulfamoylamino group, N,N-dimethylaminosulfonylamino group, N-n-octylaminosulfonylamino group and the like can be exemplified. Examples of the substituents include alkyl groups, aryl groups, and heterocyclic groups.

As the alkyl or aryl sulfonylamino group, preferably, substituted or unsubstituted alkylsulfonylamino groups having from 1 to 30 carbon atoms, preferably from 1 to 20 carbon atoms and most preferably 1 to 15 carbon atoms, excluding substituents, or substituted or unsaturated arylsulfonylamino groups having from 6 to 30 carbon atoms, preferably from 6 to 20 carbon atoms and more preferably from 6 to 15 carbon atoms, such as methylsulfonylamino group, butylsulfonylamino group, phenylsulfonylamino group, 2,3,5-trichlorophenylsulfonylamino group, p-methylphenylsulfonylamino group and the like can be exemplified. Examples of the substituents include hydroxyl groups, alkoxy groups, cyano groups, halogen atoms, and ionic hydrophilic groups.

As the alkylthio group, preferably, substituted or unsubstituted alkylthio groups having from 1 to 30 carbon atoms, preferably from 1 to 20 carbon atoms and more preferably from 1 to 15 carbon atoms, excluding substituents of the alkylthio group, such as methylthio group, ethylthio group, n-hexadecylthio group and the like can be exemplified. Examples of the substituents include hydroxyl groups, alkoxy groups, cyano groups, halogen atoms, and ionic hydrophilic groups.

As the arylthio group, preferably, substituted or unsubstituted arylthio groups having from 6 to 30 carbon atoms, preferably from 6 to 20 carbon atoms and more preferably from 6 to 15 carbon atoms, excluding substituents of the arylthio group, such as phenylthio group, p-chlorophenylthio group, m-methoxyphenylthio group and the like can be exemplified. Examples of the substituents include hydroxyl groups, alkoxy groups, cyano groups, halogen atoms, and ionic hydrophilic groups.

As the heterocyclic thio group, preferably, substituted or unsubstituted heterocyclic thio groups having from 2 to 30 carbon atoms, preferably from 2 to 20 carbon atoms and more preferably from 2 to 15 carbon atoms, excluding substituents of the heterocyclic thio group, such as 2-benzothiazolylthio group, 1-phenyltetrazol-5-ylthio group and the like can be exemplified. Examples of the substituents include hydroxyl groups, alkoxy groups, cyano groups, halogen atoms, and ionic hydrophilic groups.

As the sulfamoyl group, preferably, substituted or unsubstituted sulfamoyl groups having from 0 to 30 carbon atoms, preferably from 0 to 20 carbon atoms and more preferably from 0 to 15 carbon atoms, excluding substituents of sulfamoyl groups, such as N-ethylsulfamoyl group, N-(3-dodecylaxypropyl)sulfamoyl group, N,N-dimethylsulfamoyl group, N-acetylsulfamoyl group, N-benzoylsulfamoyl group, N-(N'-phenylcarbamoyl)sulfamoyl group and the like can be exemplified. Examples of the substituents include alkyl groups, aryl groups, and heterocyclic groups.

As the alkyl or aryl sulfinyl group, preferably, substituted or unsubstituted alkylsulfinyl groups having from 1 to 30 carbon atoms, preferably from 1 to 20 carbon atoms and more preferably from 1 to 15 carbon atoms, excluding substituents, and substituted or unsubstituted arylsulfinyl groups having from 6 to 30 carbon atoms, preferably from 6 to 20 carbon atoms and more preferably from 6 to 15 carbon atoms, excluding substituents, such as methylsulfinyl group, ethylsulfinyl group, phenylsulfinyl group, p-methylphenylsulfinyl group and the like can be exemplified. Examples of the substituents include hydroxyl groups, alkoxy groups, cyano groups, halogen atoms, and ionic hydrophilic groups.

As the alkyl or aryl sulfonyl group, preferably, substituted or unsubstituted alkylsulfonyl groups having from 1 to 30 carbon atoms, preferably from 1 to 20 carbon atoms and more preferably from 1 to 15 carbon atoms, excluding substituents, and substituted or unsubstituted arylsulfonyl groups having from 6 to 30 carbon atoms, preferably from 6 to 20 carbon atoms and more preferably from 6 to 15 carbon atoms, excluding substituents, such as methylsulfonyl group, ethylsulfonyl group, phenylsulfonyl group, p-methylphenylsulfonyl group and the like can be exemplified. Examples of the substituents include hydroxyl groups, alkoxy groups, cyano groups, halogen atoms, and ionic hydrophilic groups.

As the acyl group, preferably, formyl group, or substituted or unsubstituted alkylcarbonyl groups having from 2 to 30 carbon atoms, preferably from 2 to 20 carbon atoms and more preferably from 2 to 15 carbon atoms, excluding substituents, substituted or unsubstituted arylcarbonyl groups having from 7 to 30 carbon atoms, preferably from 7 to 20 carbon atoms and more preferably from 7 to 15 carbon atoms, excluding substituents and substituted or unsubstituted heterocyclic carbonyl groups having from 2 to 30 carbon atoms, preferably from 2 to 20 carbon atoms and more preferably from 2 to 15 carbon atoms, excluding substituents, bonded with carbonyl group via a carbon atom, such as acetyl group, pivaloyl group, 2-chloroacetyl group, stearoyl group, benzoyl group, p-n-octyloxyphenylcarbonyl group, 2-pyridylcarbonyl group, 2-furylcarbonyl group and the like can be exemplified. Examples of the substituents include alkyl groups, aryl groups, and heterocyclic groups.

As the aryloxycarbonyl group, preferably, substituted or unsubstituted aryloxycarbonyl groups having from 7 to 30 carbon atoms, preferably from 7 to 20 carbon atoms and more preferably from 7 to 15 carbon atoms, excluding substituents of the aryloxycarbonyl group, such as phenoxycarbonyl group, o-chlorophenoxycarbonyl group, m-nitrophenoxy, carbonyl group, p-t-butylphenoxycarbonyl group and the like can be exemplified. Examples of the substituents include hydroxyl groups, alkoxy groups, cyano groups, halogen atoms, and ionic hydrophilic groups.

As the alkoxycarbonyl group, preferably, substituted or unsubstituted alkoxycarbonyl groups having from 2 to 30 carbon atoms, preferably from 2 to 20 carbon atoms and more preferably from 2 to 15 carbon atoms, excluding substituents of the alkoxycarbonyl group, such as methoxycarbonyl group, ethoxycarbonyl group, t-butoxycarbonyl group, n-octadecyloxycarbonyl group and the like can be exemplified. Examples of the substituents include hydroxyl groups, alkoxy groups, cyano groups, halogen atoms, and ionic hydrophilic groups.

As the carbamoyl group, preferably, substituted or unsubstituted carbamoyl groups having from 1 to 30 carbon atoms, preferably from 1 to 20 carbon atoms and more preferably from 1 to 15 carbon atoms, excluding substituents of the carbamoyl groups, such as carbamoyl group, N-methylcarbamoyl group, N,N-dimethylcarbamoyl group, N,N-di-n-octylcarbamoyl group, N-(methylsulfonyl)carbamoyl group and the like can be exemplified. Examples of the substituents include alkyl groups, aryl groups, and heterocyclic groups.

As the aryl or heterocyclic azo group, preferably, substituted or unsubstituted arylazo groups having from 6 to 30 carbon atoms, preferably from 6 to 20 carbon atoms and more preferably from 6 to 15 carbon atoms, excluding substituents, and substituted or unsubstituted heterocyclic azo groups having from 3 to 30 carbon atoms, preferably from 3 to 20 carbon atoms and more preferably from 3 to 15 carbon atoms, excluding substituents, such as phenylazo, p-chlorophenylazo, 5-ethylthio-1,3,4-thiadiazol-2-ylazo and the like can be exemplified. Examples of the substituents include hydroxyl groups, alkoxy groups, cyano groups, halogen atoms, and ionic hydrophilic groups.

As the imido group, preferably, N-succinimido group having from 0 to 30 carbon atoms, preferably from 0 to 20 carbon atoms and more preferably from 0 to 15 carbon atoms, excluding substituents of the imido groups, such as N-phthalimido group and the like can be exemplified. Examples of the substituents include alkyl groups, aryl groups, and heterocyclic groups.

As the phosphino group, preferably, substituted or unsubstitutedphosphino groups having from 0 to 30 carbon atoms, preferably from 0 to 20 carbon atoms and more preferably from 0 to 15 carbon atoms, excluding substituents, such as dimethylphosphino group, diphenylphosphino group, methylphenoxyphosphino group and the like can be exemplified.

As the phosphinyl group, preferably, substituted or unsubstituted phosphinyl groups having from 0 to 30 carbon atoms, preferably from 0 to 20 carbon atoms and more preferably from 0 to 15 carbon atoms, excluding substituents, such as phosphinyl group, dioctylphosphinyl group, diethoxyphosphinyl group and the like can be exemplified. Examples of the substituents include alkyl groups, aryl groups, and heterocyclic groups.

As the phosphinyloxy group, preferably, substituted or unsubstituted phosphinyloxy groups having from 0 to 30 carbon atoms, preferably from 0 to 20 carbon atoms and more preferably from 0 to 15 carbon atoms, excluding substituents, such as diphenoxyphosphinyloxy group, dioctyloxyphosphinyloxy group and the like can be exemplified. Examples of the substituents include alkyl groups, aryl groups, and heterocyclic groups.

As the phosphinylamino group, preferably, substituted or unsubstituted phosphinylamino groups having from 0 to 30 carbon atoms, preferably from 0 to 20 carbon atoms and more preferably from 0 to 15 carbon atoms, excluding substituents, such as dimethoxyphosphinylamino group, dimethylaminophosphinylamino group and the like can be exemplified. Examples of the substituents include alkyl groups, aryl groups, and heterocyclic groups.

As the silyl group, preferably, substituted or unsubstituted silyl groups having from 0 to 30 carbon atoms, preferably from 0 to 20 carbon atoms and more preferably from 0 to 15 carbon atoms, excluding substituents, such as trimethylsilyl group, t-butyldimethylsilyl group, phenyldimethylsilyl group and the like can be exemplified. Examples of the substituents include alkyl groups, aryl-groups, and heterocyclic groups.

As the ionic hydrophilic group, sulfo group, carboxyl group, phosphono group, quaternary ammonium group and the like are included therein. As the ionic hydrophilic group, carboxyl group and sulfo group are preferable and carboxyl group is particularly preferable. The carboxyl group and sulfo group may be in the form of a salt, and examples of the salt-forming counter ion include alkali metal ions (e.g., lithium ion, sodium ion and potassium ion) and an organic cation (e.g., tetramethylguanidium ion).

As examples of the ionic hydrophilic group, lithium sulfonate, potassium carboxylate and tetramethylammonium chloride can be cited.

In the case of those which have hydrogen atom among the aforementioned substituent groups, said hydrogen atom may be replaced by the aforementioned substituent group. As examples of such a substituent group, an alkylcarbonylaminosulfonyl group, an arylcarbonylaminosulfonyl group, an alkyl sulfonylaminocarbonyl group and an arylsulfonylaminocarbonyl group can be cited. Their illustrative examples include methylsulfonylaminocarbonyl group, p-methylphenylsulfonylaminocarbonyl group, acetylaminosulfonyl group and benzoylaminosulfonyl group.

Next, production conditions regarding the step (b) concerned in the invention are described in detail.

The step (b) is a step of mixing the diazonium compound prepared solution obtained at the step (a) with a compound represented by the general formula (1) to cause the diazonium compound in the diazonium compound prepared solution obtained at the step (a) to be coupled to the compound represented by the general formula (1). The method for mixing the diazonium compound prepared solution obtained at the step (a) with the compound represented by the general formula (1) is not specifically limited. It is preferred that the diazonium compound prepared solution obtained at the step (a) be added to a mixture of the compound represented by the general formula (1) and a solvent.

Amount of the diazonium compound in the diazonium compound prepared solution obtained in the step (a) based on a compound represented by general formula (1) to be used in the step (b) is preferably from 1 to 5 equivalents based on the coupling position of the compound represented by formula (1), more preferably from 1.05 to 3 equivalents based on the coupling position, further preferably from 1.1 to 2 equivalents based on the coupling position. In order to achieve the coupling at all coupling positions in the compound represented by formula (1) to be used, 1 equivalent is necessary based on the diazonium moiety, but 5 equivalents or more result in the use of a large amount of the diazonium compound and therefore are uneconomical.

Though solvent of the compound represented by formula (1) to be used in the step (b) is not particularly limited, an alcohol solvent and an organic acid solvent can be cited. As examples of the alcohol solvent, methanol, ethanol, isopropanol, pentanol, heptanol, octanol, cyclohexanol, benzyl alcohol, phenetyl alcohol, phenylpropyl alcohol, furfuryl alcohol and anise alcohol can be cited. Not only mono- but also oligo- (particularly di- and tri-) and poly-$C_2$-$C_4$-alkylene glycol (in short, "glycol") and their mono-$C_1$-$C_8$-alkyl- and mono aryl ethers (in short, "glycol mono ether") are also suitable. In addition, ethylene-based compounds are also advantageous. Their examples include ethylene glycol, 1,2- and 1,3-propylene glycol, diethylene glycol, butylene glycol, di-, tri- and tetraethylene glycol, di-, tri- and tetrapropylene glycol, polyethylene- and polypropylene glycol, ethylene glycol monomethyl-, -monoethyl-, -monopropyl-, -monobutyl- and monohexyl ether and propylene glycol monomethyl-, -monoethyl-, -monopropyl-, -monobutyl- and monohexyl ether, di-, tri- and tetraethylene glycol monomethyl-, -monoethyl- and monobutyl ether and di-, tri- and tetrapropylene glycol monomethyl-, -monoethyl- and monobutyl ether, and ethylene- and propylene glycol monophenyl ether. Most preferred are methanol, ethanol, isopropanol, ethylene glycol and diethylene glycol. A mixed solvent thereof is also advantageous.

The amount of the solvent to be added is preferably from 0.5 to -200 times by mass, more preferably from 1 to 100 times by mass, even more preferably from 1 to 50 times by mass the amount of the compound represented by the general formula (1). When the amount of the solvent to be added is 0.5 times or less by mass the amount of the compound represented by the general formula (1), the compound represented by the general formula (1) and the solvent can be difficultly agitated by the producing machine, disabling the progress of desired reaction. On the other hand, when the amount of the solvent to be added is 200 times or more by mass the amount of the compound represented by the general formula (1), it is uneconomical.

Examples of the organic acid include formic acid, acetic acid, propionicacid, butyric acid and methanesulfonic acid, ofwhichacetic acid, propionic acid and methanesulfonic acid are preferred and acetic acid and propionic acid are more preferred.

As the mixed solvent containing an alcohol solvent, a mixed solvent with acetonitrile, formamide, N,N-dimethylformamide, N,N-dimethylacetamide, dimethyl sulfoxide, sulfolane, propylene carbonate, N-methyl-2-pyrrolidone, N-vinyl-2-pyrrolidone or N,N-diethyldodecaneamide is preferable. In addition, a mixed solvent of the organic acid shown in the above with an alcohol solvent is also suitable.

Further, the mixture of the compound represented by the general formula (1) and the solvent may comprise a base incorporated therein. Examples of the base employable herein include organic bases such as triethylamine, tributylamine, diisopropylamine, pyridine, dimethylaminopyridine, DBU(1,8-diazabicyclo [5.4.0]-undecene, and inorganic bases such as lithium carbonate, sodium carbonate, potassium carbonate, sodium hydrogencarbonate, lithium hydroxide, sodium hydroxide and potassium hydroxide. Examples of salts of organic acid with strong base include lithium acetate, potassium acetate, sodium oxalate, and disodium ethylenediaminetetraacetate.

In the case where such a base is added, the time at which the base is added is not specifically limited. The mixture of the compound represented by the general formula (1) and the solvent may be mixed with the diazonium compound prepared solution obtained at the step (a). Alternatively, the diazonium compound prepared solution obtained at the step (a) and the base may be alternately added to the mixture of the compound represented by the general formula (1) and the solvent.

The pH value of the mixture at the step (b) is preferably 12 or less, more preferably 10 or less, even more preferably 9 or less. When the pH value of the mixture at the step (b) is 12 or more, the diazonium compound derived at the step (a) can be decomposed, making it unlikely that the desired reaction progress can be attained.

Regarding the temperature in mixing the diazonium compound prepared solution of the step (a) with the compound represented formula (1) at the step (b), the mixing is carried out preferably at 20˚C or less, more preferably at 15˚C or less, further preferably at 12˚C or less. At 20˚C or more, degradation of the diazonium compound could occur. For mixing, an ordinary agitator is used. The agitator is not specifically limited. Though depending on the production facilities, the rotary speed of agitation is preferably from 30 rpm to 300 rpm, more preferably from 40 rpm to 200 rpm, even more preferably from 50 rpm to 200 rpm. When the agitation speed is 30 rpm or less as calculated in terms of rotary speed, the resulting effect of agitating the mixture is deteriorated, making it unlikely that the desired reaction progress can be attained. The stirring time on the step (b) is preferably from 0.3 to 10 hours, more preferably from 0.5 to 5 hours, further preferably from 1 to 3 hours. Complete induction to the azo compound is difficult to attain when it is 0.3 hour or less, and there is a possibility of causing degradation of the diazonium compound when it is 10 hours or more.

Next, the compound represented by formula (1) concerned in the invention is described in detail.

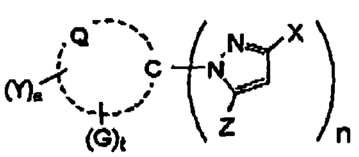

(1)

Each of X independently represents hydrogen atom or a substituent group, wherein this substituent group may further have a substituent group.

Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group, and each of $R^2$ to $R^4$ independently represents a hydrogen atom, an alkyl group, an alkenyl group, an alkynyl group, an aralkyl group, an aryl group or a heterocyclic group. These groups may further have a substituent group.

Z represents -OM or $-NR^5R^6$, wherein M represents hydrogen atom or a metal ion, and each of $R^5$ and $R^6$ independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group. These groups may further have a substituent group.

G represents hydrogen atom or a halogen atom.

Q is an atomic group which constitutes a nitrogen-containing heterocyclic ring together with the carbon atom directly bonding to the pyrazole.

The signs n, s and t are figures which satisfy the relations of $1 \leq n \leq 3$, $0 \leq s \leq 2$, $0 \leq t \leq 1$ and $n + s + t = 3$.

Details of the general formula (1) are described in the following.

X in the aforementioned general formula (1) each independently represents hydrogen atom or a substituent group. Regarding the substituent group, it preferably represents halogen atom, alkyl group, alkenyl group, an alkynyl group, an aralkyl group, an aryl group, heterocyclic group, cyano group, carboxyl group, carbamoyl group, alkoxycarbonyl group, aryloxycarbonyl group, acyl group, hydroxy group, alkoxy group, aryloxy group, silyloxy group, acyloxy group, carbamoyloxy group, heterocyclic oxy group, alkoxycarbonyloxy group, aryloxycarbonyloxy group, amino group, amino group substituted with an alkyl group or an aryl group or a heterocyclic group, acylamino group, sulfamoylamino group, alkoxycarbonylamino group, alkyl or arylsulfonylamino group, aryloxycarbonylamino group, nitro group, thio group, alkyl or arylthio group, acylthio group, carbamoylthio group, heterocyclic thio group, alkoxycarbonylthio group, aryloxycarbonylthio group, alkyl or arylsulfinyl group, sulfamoyl group, ionic hydrophilic group or amido group, more preferably represents halogen atom, alkyl group, alkenyl group, an alkynyl group, an aryl group, heterocyclic group, cyano group, carboxyl group, carbamoyl group, alkoxycarbonyl group, aryloxycarbonyl group, acyl group, hydroxy group, alkoxy group, aryloxy group, acyloxy group, carbamoyloxy group, heterocyclic oxy group, alkoxycarbonyloxy group, aryloxycarbonyloxy group, amino group, amino group substituted with an alkyl group or an aryl group or a heterocyclic group, acylamino group, sulfamoylamino group, alkoxycarbonylamino group, alkyl or arylsulfonyl amino group, aryloxycarbonylamino group, thio group, alkyl or arylthio group, acylthio group, carbamoylthio group, heterocyclic thio group, alkoxycarbonylthio group, aryloxycarbonylthio group, ionic hydrophilic group or amido group, and further preferably represents halogen atom, alkyl group, alkenyl group, an alkynyl group, aryl group, heterocyclic group, hydroxy group, alkoxy group, aryloxy group, heterocyclic oxy group, amino group, amino group substituted with an alkyl group or an aryl group or a heterocyclic group, thio group, alkyl or arylthio group, heterocyclic thio group or ionic hydrophilic group. Among them, preferred substituent groups are an alkyl group having the total number of carbon atoms of 1 to 8 and an aryl group having the total number of carbon atoms of 6 to 12, and most preferred are isopropyl group, sec-butyl group and tert-butyl group. Each group may further have a substituent group.

Q represents an atomic group constituting a heterocyclic ring composed of at least one nitrogen atom, preferably an atomic group constituting a 5- or 6-membered heterocyclic ring composed of at least one nitrogen atom, more preferably an atomic group constituting a 6-membered heterocyclic ring composed of at least one nitrogen atom.

Preferred examples of the nitrogen-containing heterocyclic ring composed of Q and carbon atoms directly connected to pyrazole include 5-membered rings or 6- membered rings, more preferably 6-membered rings. Preferred examples of the heterocyclic rings include imidazole, benzoimidazole, pyrazole, benzopyrazole, triazole, thiazole, benzothiazole, isothiazole, benzisothiazole, oxazole, benzooxazole, thiadiazole, pyrrole, benzopyrrole, indole, isooxazole, benzoisooxazole, pyridine, quinoline, isoquinoline, pyridazine, pyrimidine, pyrazine, cinnoline, phthalazine, quinazoline, quinoxaline, and triazine. More desirable among these heterocyclic rings are pyridine, pyridazine, pyrimidine, pyrazine, and triazine. Most desirable among these heterocyclic rings are pyridazine, pyrimidine, pyrazine, and triazine. Most desirable among these heterocyclic rings is triazine.

Y represents $-OR^1$, $-NR^2R^3$ or $-SR^4$, preferably $-OR^1$ or $-NR^2R^3$, and further preferably $-OR^1$.

$R^1$ in Y is a hydrogen atom, an alkali metal ion, an organic cation, an alkyl group, an alkenyl group, an alkynyl group, an aralkyl group, an aryl group or a heterocyclic group, preferably a hydrogen atom, an alkali metal ion, an organic cation, an alkyl group, an aryl group, further preferably a hydrogen atom or an alkali metal ion.

Each of $R^2$ to $R^4$ independently represents an alkyl group, an alkenyl group, an alkynyl group, an aralkyl group, an aryl group or a heterocyclic group. 1A hydrogen atom, an alkynyl group, an aryl group or a heterocyclic group is further preferable. A hydrogen atom, an alkyl group or a heterocyclic group is more further preferable.

Examples of the alkali metal ion shown by $R^1$ include lithium ion, sodium ion and potassium ion, more preferably lithium ion and potassium ion.

Examples of the organic cation shown by $R^1$ include ammonium ion and tetramethylguanidium ion, more

preferably ammonium ion.

Specific examples of the alkyl group, alkenyl group, alkinyl group, aralkyl group, aryl group and heterocyclic group represented by $R^1$ to $R^4$ and substituents which may substitute on these groups have the same meaning as the substituents which may substitute on the amino compound described above, including their preferred examples.

Each group of the $R^1$ to $R^4$ in Y may further have a substituent group. Details of the substituent group are the same as the aforementioned substituent groups which can be possessed by the amino compound, including their preferred examples.

Z represents -OM or -$NR^5R^6$, and preferably represents -$NR^5R^6$.

G represents a hydrogen atom or halogen atom, preferably hydrogen atom. Examples of the halogen atom employable herein include fluorine atom, chlorine atom, bromine atom, and iodine atom. More desirable among these halogen atoms are fluorine atom and chlorine atom. Even more desirable among these halogen atoms is chlorine atom.

Each of $R^5$ and $R^6$ independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group. Preferably, it represents a hydrogen atom, an alkyl group, an alkenyl group, an alkynyl group, an aralkyl group, an aryl group or an alkylcarbonyl or arylcarbonyl group. More preferably, it represents a hydrogen atom, an alkyl group, an aryl group or an alkylcarbonyl or arylcarbonyl group. Most preferably, it represents a hydrogen atom.

Illustrative descriptions of an alkyl group, an alkenyl group, an alkynyl group, an aralkyl group, an aryl group and a heterocyclic group shown by $R^5$ and $R^6$ are the same as the substituent groups $R^1$ to $R^4$ in Y, including their preferred examples.

An alkyl or arylcarbonyl group having a substituent group is included in the alkyl or arylcarbonyl group represented by $R^5$ and $R^6$. As the alkylcarbonyl group, an alkylcarbonyl group having from 2 to 6 carbon atoms when the substituent group is removed is preferable. Examples of the substituent group include an alkyl group, an alkoxy group, a halogen atom, an alkylamino group and an ionic hydrophilic group. Examples of the alkylcarbonyl group include acyl group, ethylcarbonyl group, trifluoromethyl group and pivaloyl group. Also, as the arylcarbonyl group, an arylcarbonyl group having from 7 to 1-2 carbon atoms when the substituent group is removed is preferable. Examples of the substituent group include an alkyl group, an alkoxy group, a halogen atom, an alkylamino group, nitro group, cyano group and an ionic hydrophilic group. Examples of the arylcarbonyl group include benzoyl group, p-chlorobenzoyl group and m-carboxyphenylcarbonyl group.

An alkyl or arylsulfonyl group having a substituent group and an unsubstituted alkyl or arylsulfonyl group are included in the alkyl or arylsulfonyl group represented by $R^5$ and $R^6$. As the alkylsulfonyl group, an alkylsulfonyl group having from 1 to 5 carbon atoms when the substituent group is removed is preferable. Examples of the substituent group include an alkyl group, an alkoxy group, a halogen atom, an alkylamino group and an ionic hydrophilic group. Examples of the alkylsulfonyl group include mesyl group, ethylsulfonyl group and trifluoromethylsulfonyl group. Also, as the arylsulfonyl group, an arylsulfonyl group having from 6 to 11 carbon atoms when the substituent group is removed is preferable. Examples of the substituent group include an alkyl group, an alkoxy group, a halogen atom, an alkylamino group, nitro group, cyano group and an ionic hydrophilic group. Examples of the arylsulfonyl group include phenylsulfonyl group, p-chlorosulfonyl group and m-carboxyphenylsulfonyl group.

The substituent group which may be possessed by respective substituent groups are the same as the aforementioned substituent group that may be possessed by the amino compound, and its preferred examples are also the same.

The signs n, s and t respectively represent the number of substitutions of the pyrazole, substituent group Y and substituent group G. The sign n is an integer of 1 or more, preferably a substitution number of from 1 to 3, more preferably 2 or 3, most preferably 2, from the aspect of production time and yield on the producing method of the invention. The sign s is an integer of 0 or more, preferably an integer of 1 or more, more preferably 1 or 2, particularly preferably 1. The sign t is an integer of 0 or more, preferably an integer of from 0 to 4, more preferably 0 or 1.

In addition, the compound represented by the general formula (1) may form a dimer accompanied by L (a divalent connecting group).

The divalent connecting group represented by L includes oxy group -O-, thio group -S-, carbonyl group -CO-, sulfinyl group -$SO_2$-, imino group -NH-, methylene group -$CH_2$-, phenylene group -Ph-, a heterocyclic group and a group formed by combining them, and examples of the group formed by a combination of connecting groups include urea, triazine, 1, 3-diaminopropane and 1,4-phenylenediamine.

Summarizing the foregoing contents, the general formula (1) of the invention preferably comprises the following constitutions (a) to (h) in combination.

(a) X preferably represents a hydrogen atom, $C_1$-$C_8$ alkyl group or $C_6$-$C_{12}$ aryl group, more preferably isopropyl group, sec-butyl group or tert-butyl group, most preferably tert-butyl group.

(b) Z represents -OM or -$NR^5R^6$, preferably -$NR^5R^6$. $R^5$ and $R^6$ preferably each independently represent a hydrogen atom, alkyl group, alkenyl group, alkinyl group, aralkyl group, aryl group or arylcarbonyl group, more preferably

hydrogen atom, alkyl group or arylcarbonyl group, even more preferably hydrogen atom, alkyl group, aryl group, alkyl group or arylcarbonyl group, most preferably hydrogen atom.

(c) Q represents an atomic group which constitutes a hetero cyclic ring containing at least one nitrogen atom (nitrogen-containing hetero cyclic ring), preferably represents an atomic group which constitutes a 5 or 6-membered hetero cyclic ring containing at least one nitrogen atom, and more preferably represents an atomic group which constitutes a 6-membered hetero cyclic ring containing at least one nitrogen atom. Examples of the nitrogen-containing heterocyclic ring composed of Q and carbon atoms directly connected to pyrazole include pyridine, pyridazine, pyrimidine, pyrazine, and triazine. Most desirable among these nitrogen-containing heterocyclic rings are pyridazine, pyrimidine, pyrazine, and triazine. Among these nitrogen-containing heterocyclic rings is triazine.

(d) Y represents $-OR^1$, $-NR^2R^3$ or $-SR^4$, preferably $-OR^1$ or $-NR^2R^3$, more preferably $-OR^1$. Preferred among the groups $-R^1$ are hydrogen atom, alkaline metal ion, organic cation alkyl group, and aryl group, more preferably hydrogen atom and alkaline metal ion. Preferred among the alkaline metal ions are lithium ion, sodium ion and potassium ion. Most desirable among these alkaline metal ions are lithium ion and potassium ion.

(e) G represents a hydrogen atom or halogen atom, preferably halogen atom. Preferred among the halogen atoms are fluorine atom and chlorine atom. More desirable among these halogen atoms is chlorine atom.

(f) The suffix n represents an integer of from 1 to 3, more preferably 2 or 3, most preferably 2.

(g) The suffix s represents an integer of 0, 1 or 2, more preferably 1 or 2, most preferably 1.

(h) The suffix t represents an integer of 0 or 1, preferably 0.

In this connection, regarding the combination of desirable substituent groups of the compound represented by general formula (1), a compound in which at least one of the various substituent groups is the aforementioned desired group is desirable, a compound in which many of the various substituent groups are the aforementioned desired groups is more desirable, and a compound in which all of the substituent groups are the aforementioned desired groups is most desirable.

Among compounds represented by the general formula (1), a compound represented by the following general formula (2) is more desirable.

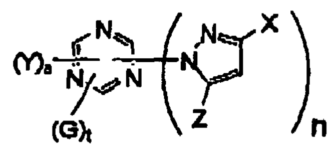

(2)

In the aforementioned general formula (2):

X each independently represents hydrogen atom or a substituent group, wherein this substituent group may further have a substituent group,

Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group, each of $R^2$ to $R^4$ independently represents a hydrogen atom, an alkyl group, an alkenyl group, an alkynyl group, an aralkyl group, an aryl group or a heterocyclic group, and these groups may further have a substituent group.

Z represents -OM or $-NR^5R^6$, wherein M represents hydrogen atom or a metal ion, each of $R^5$ and $R^6$ independently represents a hydrogen atom, an alkyl group, an alkenyl group, an alkynyl group, an aralkyl group, an aryl group, a heterocyclic group, an alkylcarbonyl or arylcarbonyl group, an acyl group or an alkylsulfonyl or arylsulfonyl group, and these groups may further have a substituent group.

G represents hydrogen atom or a halogen atom, and

n, s and t are figures which satisfy the relations of $1 \leq n \leq 3$, $0 \leq s \leq 2$, $0 \leq t \leq 1$ and $n + s + t = 3$.

X, Y and Z have the same meanings as the X, Y and Z described in relation to the aforementioned general formula (1), and its preferred examples are also the same.

In addition, the compound represented by the general formula (2) may form a dimer accompanied by L (a divalent connecting group).

The divalent connecting group represented by L includes oxy group -O-, thio group -S-, carbonyl group -CO-, sulfinyl group $-SO_2-$, imino group -NH-, methylene group $-CH_2-$, phenylene group -Ph-, a heterocyclic group and a group formed by combining them, and examples of the group formed by a combination of connecting groups include urea, triazine, 1,3-diaminopropane and 1,4-phenylenedxamine.

Summarizing the foregoing contents, the general formula (2) of the invention preferably comprises the following

constitutions (a) to (g) in combination.

(a) X represents a hydrogen atom, $C_1$-$C_8$ alkyl group or $C_6$-$C_{12}$ aryl group, preferably isopropyl group, sec- butyl group or tert-butyl group, most preferably tert- butyl group.
(b) Z represents -OM or -$NR^5R^6$, preferably -$NR^5R^6$. $R^5$ and $R^6$ preferably each independently represent a hydrogen atom, alkyl group, alkenyl group, alkinyl group, aralkyl group, aryl group or arylcarbonyl group, more preferably hydrogen atom, alkyl group, aryl group, alkylcarbonyl group or arylcarbonyl group, most preferably hydrogen atom.
(c) Y represents -$OR^1$, -$NR^2R^3$ or -$SR^4$, preferably -$OR^1$ or -$NR^2R^4$, more preferably -$OR^1$. Preferred among the groups $R^1$ are hydrogen atom, alkaline metal ion, organic cation, alkyl group, and aryl group, more preferably hydrogen atom and alkaline metal ion. Preferred among the alkaline metal ions are lithium ion, sodium ion and potassium ion. Most desirable among these alkaline metal ions are lithium ion and potassium ion.
(d) G represents a hydrogen atom or halogen atom, preferably hydrogen atom. More desirable among the halogen atoms are fluorine atom and chlorine atom. Even more desirable among these halogen atoms is chlorine atom.
(e) The suffix n represents an integer of from 1 to 3, more preferably 2 or 3, most preferably 2.
(f) The suffix s represents an integer of 0, 1 or 2, more preferably 1 or 2, most preferably 1.
(g) The suffix t represents an integer of 0 or 1, preferably 0.

In this connection, regarding the compound represented by general formula (2), a compound in which at least one of the various substituent groups is the aforementioned desired group is desirable, a compound in which more of the various substituent groups are the aforementioned desired groups is more desirable, and a compound in which all of the substituent groups are the aforementioned desired groups is most desirable.

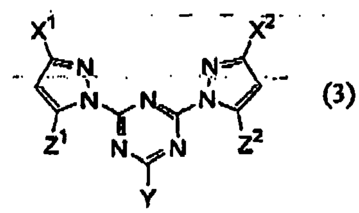 (3)

In the aforementioned general formula (3), each of $X^1$ and $X^2$ and $Z^1$ and $Z^2$ independently has the same meaning as the aforementioned X and Z, and Y has the same meaning as the aforementioned Y.
Compounds represented by the general formula (3) are described in detail in the following. X, Y and Z have the same meanings as the X, Y and Z described in relation to the aforementioned general formula (1), and the preferred examples are also the same.
Summarizing the foregoing contents, the general formula (3) of the invention preferably comprises the following constitutions (a) to (c) in combination.

(a) $X^1$ and $X^2$ preferably each independently represent a hydrogen atom, $C_1$-$C_8$ alkyl group or $C_6$-$C_{12}$ aryl group, more preferably isopropyl group, sec-butyl group or tert-butyl group, most preferably tert-butyl group.
(b) $Z^1$ and $Z^2$ each independently represent -OM or -$NR^5R^6$, preferably -$NR^5R^6$. $R^5$ and $R^6$ preferably each represent a hydrogen atom, alkyl group, alkenyl group, alkinyl group, aralkyl group, aryl group, alkylcarbonyl group or arylcarbonyl group, more preferably hydrogen atom, alkyl group, aryl group, alkylcarbonyl group or arylcarbonyl group, most preferably hydrogen atom.
(c) Y represents -$OR^1$, -$NR^2R^3$ or -$SR^4$, preferably -$OR^1$ - or -$NR^2R^3$, more preferably -$OR^1$. Preferred among the groups $R^1$ are hydrogen atom, alkaline metal ion, organic cation, alkyl group, and aryl group, more preferably hydrogen atom and alkaline metal ion. Preferred among the alkaline metal ions are lithium ion, sodium ion and potassium ion. Most desirable among these alkaline metal ions are lithium ion and potassium ion.

In this connection, regarding the compound represented by general formula (3), a compound in which at least one of the various substituent groups is the aforementioned desired group is desirable, a compound in which more of the various substituent groups are the aforementioned desired groups is more desirable, and a compound in which all of the substituent groups are the aforementioned desired groups is most desirable.
The production method of the invention is most preferably used for the production of the azo compound represented by the following general formula (5).

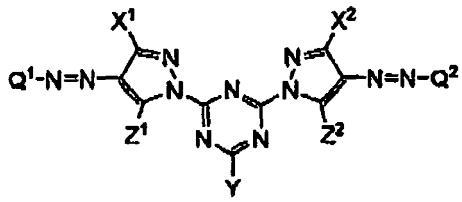

(5)

In the aforementioned general formula (5), $Q^1$ and $Q^2$ each independently represents an aromatic ring which may have a substituent group, wherein this substituent group may further have a substituent group, $X^1$ and $X^2$ each independently has the same meaning as the aforementioned X, $Z^1$ and $Z^2$ each independently has the same meaning as the aforementioned Z, and Y represents $-OR^1$ wherein $R^1$ represents hydrogen atom or a metal ion.

Details of the substituent groups have the same meaning of the aforementioned substituent groups which may be possessed by the amino compound, and the preferred examples are also the same.

$Q^1$ and $Q^2$ each independently represent an aromatic hydrocarbon group, non-aromatic hydrocarbon group, aromatic heterocyclic group or non-aromatic heterocyclic group which may have substituents. These groups may include monocyclic rings and condensed rings. Preferred among these groups are heterocyclic rings, more preferably 5- to 7-membered nitrogen-containing heterocyclic groups. Preferred examples, more desirable examples and even more desirable examples of $Q^1$ and $Q^2$ will be given below. However, the substitution position at which the substituents are connected to the azo group in $Q^1$ and $Q^2$, the substituents which may substitute on $Q^1$ and $Q^2$ and their substitution positions are not limited. Preferred examples of $Q^1$ and $Q^2$ include phenyl groups, imidazolyl groups, benzoimidazolyl groups, pyrazolyl groups, benzopyrazolyl groups, triazolyl groups, thiazolyl groups, benzothiazolyl groups, isothiazolyl groups, benzoisothiazolyl groups, oxazolyl groups, benzooxazolyl groups, thiadiazolyl groups, pyrrolyl groups, benzopyrrolyl groups, indolyl groups, isooxaolyl groups, benzoisooxazolyl groups, thiophenyl groups, benzothiophenyl groups, furanyl groups, benzofuranyl groups, pyridinyl groups, quinolinyl groups, isoquinolinyl groups, pyridazinyl groups, pyrimidinyl groups, pyradinyl groups, cinnolininyl groups, phthaladinyl groups, quinazolinyl groups, quinoxalinyl groups, and triazinyl groups. More desirable examples of $Q^1$ and $Q^2$ include pyridinyl groups, pyrimidinyl groups, pyridazinyl groups, pyrrolyl groups, imidazolyl groups, pyrazolyl groups, triazolyl groups, oxazolyl groups, isooxazolyl groups, thiazolyl groups, isothiazolyl groups, and thiadiazolyl groups. Even more desirable examples of $Q^1$ and $Q^2$ include pyrazolyl groups, thiazolyl groups, isothiazolyl groups, and thiadiazolyl groups. Particularly preferred among these groups are pyrazolyl groups. In particular, the substituent on the pyrazolyl group is preferably a cyano group, $-SO_2CH_3$ or $-SO_2Ph$, most preferably cyano group.

Summarizing the foregoing contents, the general formula (5) of the invention preferably comprises the following constitutions (a) to (d) in combination.

(a) $X^1$ and $X^2$ preferably each independently represent a hydrogen atom, $C_1$-$C_8$ alkyl group or $C_6$-$C_{12}$ aryl group, more preferably isopropyl group, sec-butyl group or tert-butyl group, most preferably tert-butyl group.

(b) $Z^1$ and $Z^2$ each independently represent -OM or $-NR^5R^6$, preferably $-NR^5R^6$. $R^5$ and $R^6$ preferably each represent -a-hydrogen atom, alkyl group, alkenyl group, alkinyl group, aralkyl group, aryl group, alkylcarbonyl group or arylcarbonyl group, more preferably hydrogen atom, alkyl group, aryl group, alkylcarbonyl group or arylcarbonyl group, most preferably hydrogen atom.

(c) Y represents $-OR^1$, and $R^1$ represents a hydrogen atom or a metal ion, preferably a hydrogen atom or an alkali metal ion, and more preferably an alkali metal ion. Preferred among the alkaline metal ions are lithium ion, sodium ion and potassium ion. Most desirable among these alkaline metal ions are lithium ion and potassium ion.

(d) $Q^1$ and $Q^2$ each independently represent a pyridinyl group, pyrimidinyl group, pyridazinyl group, pyrrolyl group, imidazolyl group, pyrazolyl group, triazolyl group, oxazolyl group, isooxazolyl group, thiazolyl group, isothiazolyl group or thiadiazolyl group. Even more desirable examples of $Q^1$ and $Q^2$ include pyrazolyl groups, thiazolyl groups, isothiazolyl groups, and thiadiazolyl groups. Particularly preferred among these groups are pyrazolyl groups. In particular, the substituent on the pyrazolyl group is preferably a cyano group, $-SO_2CH_3$ or $-SO_2Ph$, most preferably cyano group. The compound represented by the general formula (5) is preferably a compound at least one of the various substituents on which is the aforementioned preferred group, more preferably a compound more of the various substituents on which are the aforementioned preferred groups, most preferably a compound all of the various substituents on which are the aforementioned preferred groups.

Specific examples of the compound represented by the general formula (5) will be given below, but the invention is not limited thereto.

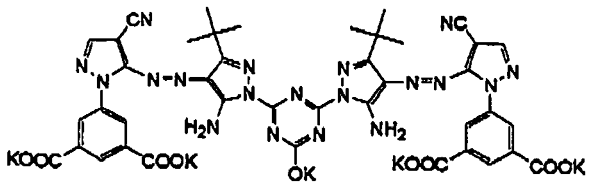

azo compound 1

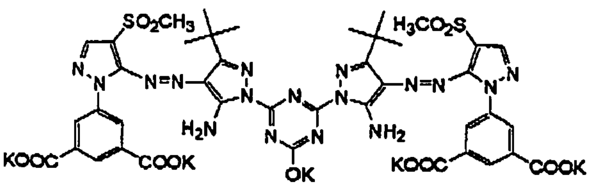

azo compound 2

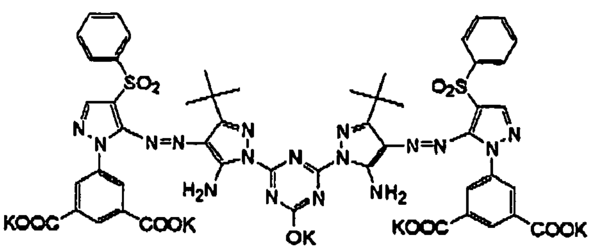

azo compound 3

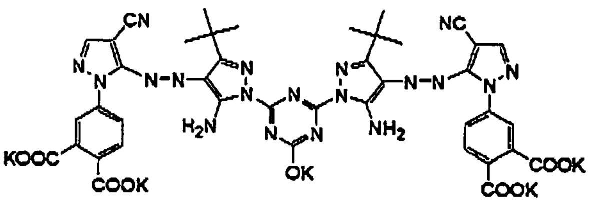

azo compound 4

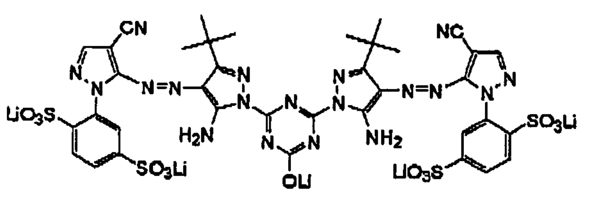

azo compound 5

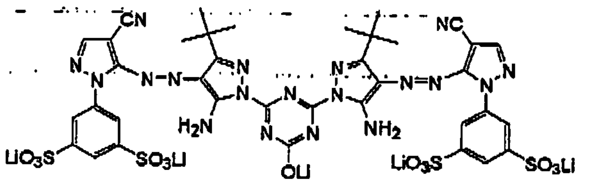

azo compound 6

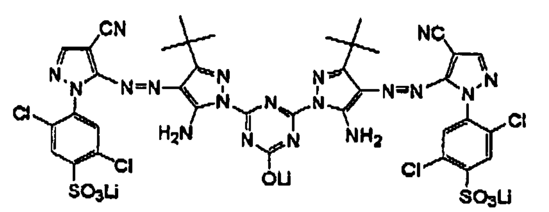

azo compound 7

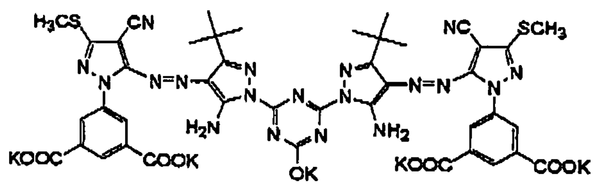

azo compound 8

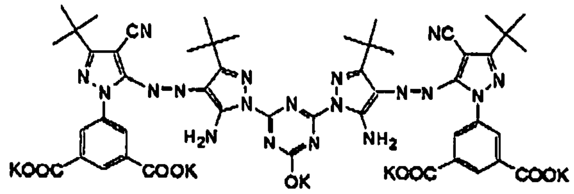

azo compound 9

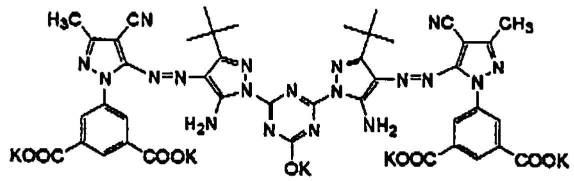

azo compound 10

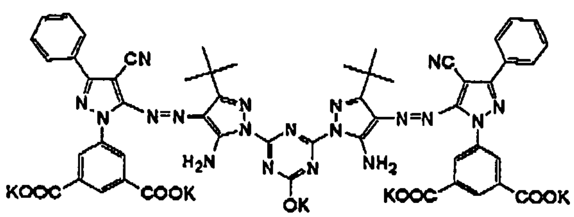

azo compound 11

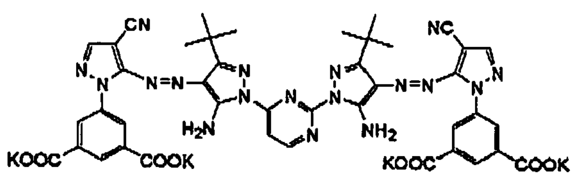

azo compound 12

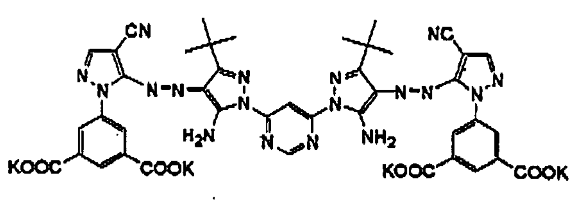

azo compound 13

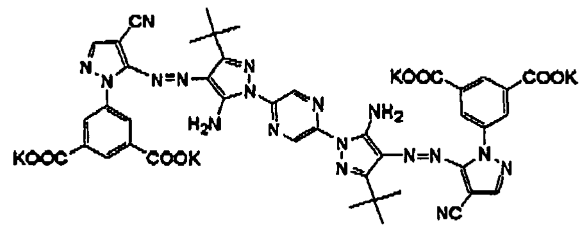

azo compound 14

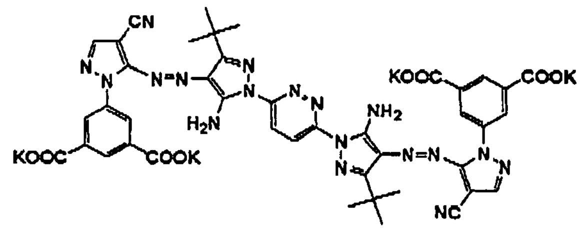

azo compound 15

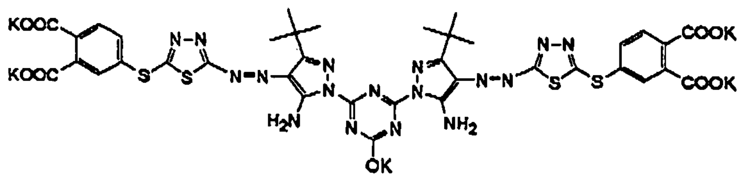

azo compound 16

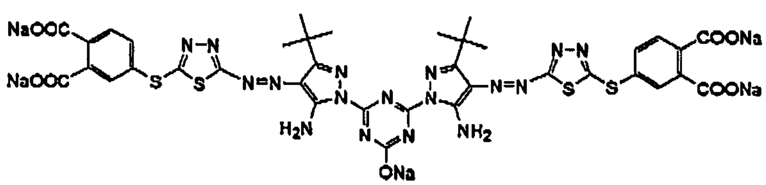

azo compound 17

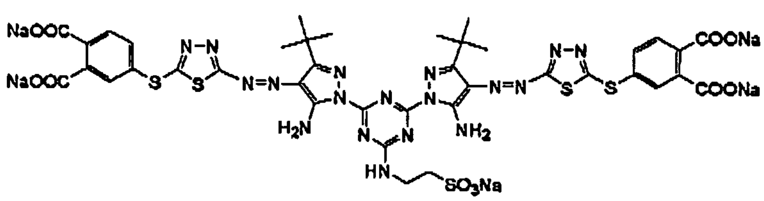

azo compound 18

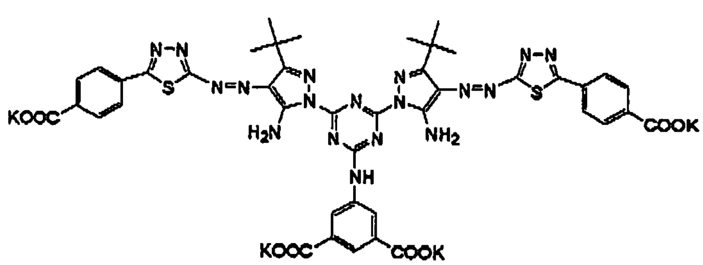

azo compound 19

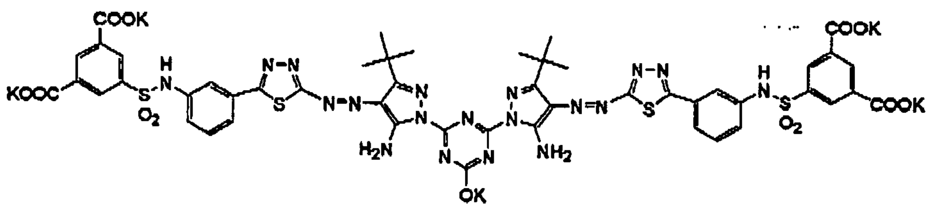

azo compound 20

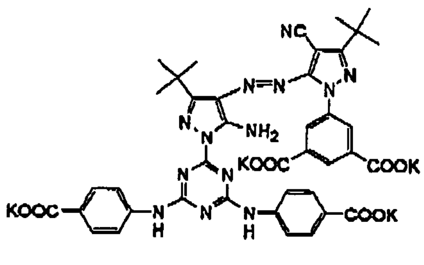

azo compound 21

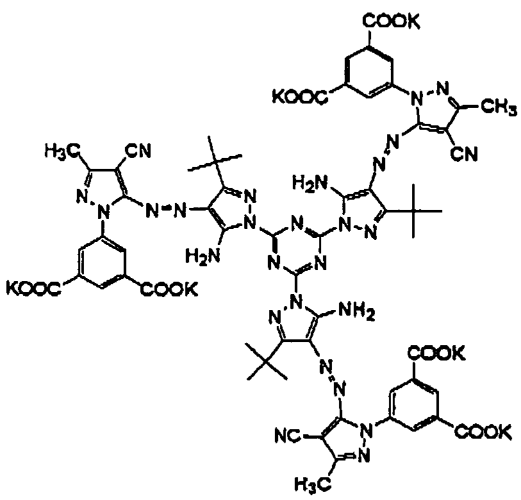

azo compound 22

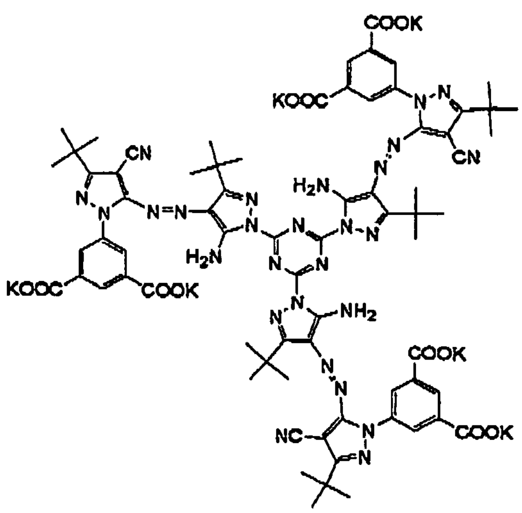

azo compound 23

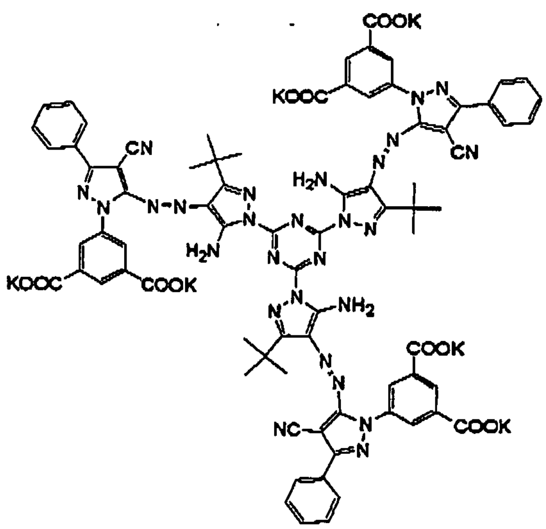

azo compound 24

Next, the step (c) concerned in the invention are described in detail.

When a step (c) of stirring the mixture obtained at the step (b) under heating is effected, the azo compound thus produced can be recovered in a high yield in a short period of time. The term "under heating" as used herein is meant to indicate that the temperature of the mixture is kept at room temperature or higher.

Regarding the heat condition on the step (c), the temperature of the mixture is preferably from 40 to 100˚C, more preferably from 50 to 80˚C, and most preferably from 50 to 75˚C. In the case where the temperature of the mixture is less than 40˚C, filterability is insufficient. In the where the temperature of the mixture is more than 100˚C, the crystallized azo compound is dissolved to accelerate decomposition of the azo compound, thereby lowering the yield. The heating rate is not specifically limited.

Stirring under heating is preferably performed-for 0.5 hour or more, more preferably 0. 5 to 4 hours and most preferably 1 to 2 hours. When the heating time is too short, the effect on filterability is low. When the heating time is too long, the yield decreases due to decomposition of the azo compound as described above. For mixing, an ordinary agitator is used. The agitator is not specifically limited. Though depending on the production facilities, the rotary speed of agitation is preferably from 30 rpm to 300 rpm, more preferably from 40 rpm to 200 rpm, even more preferably from 50 rpm to 200 rpm. When the agitation speed is 30 rpm or less as calculated in terms of rotary speed, the resulting effect of agitating the mixture is deteriorated, making it unlikely that the desired reaction progress can be attained.

Since the mixture obtained after the step (b) is strongly acidic, the decomposition of the azo compound thus produced can proceed remarkably if the mixture is merely stirred under heating as it is. It is thus preferred that the strong acid in the mixture be partially neutralized with a base before being stirred under heating. Examples of the base employable herein include triethylamine, sodium methoxide, and ammonia. As an inorganic base there is preferably used a hydroxide of alkaline metal. These bases may be used singly or in admixture with a medium. Examples of such a medium include water, methanol, ethanol, isopropanol, and ethylene glycol. Preferred examples of these media include aqueous solution or organic solution of ammonia. More desirable examples of these media include triethylamine, methanol solution of sodium methoxide, methanol or aqueous solution of potassiumhydroxide, and methanol or aqueous solution of ammonia. Most desirable among these media is methanol solution of potassium hydroxide. The added amount of the base is preferably high enough to completely neutralize the acid used at the step (a), more preferably such that the pH value of the mixture at the step (c) is from 0 to 7, more preferably from 0 to 5, most preferably from 0 to 3.

The pH of the solution in the heating on the step (c) is preferably 0 to 10, more preferably 0 to 9 and most preferably 0 to 7.

In summarizing the above, it is desirable that the azo compound production method of the invention is a production method consisting of the combination of the following (a) to (e).

(a) As the acid to be used in the production method of the invention, an inorganic acid and an organic acid can be used, and hydrochloric acid, phosphoric acid and sulfuric acid can be exemplified as the inorganic acid, of which phosphoric acid and sulfuric acid are preferable, and sulfuric acid is more preferable. The organic acid includes formic acid, acetic acid, propionic acid and methanesulfonic acid, of which acetic acid, propionic acid and methanesulfonic acid are preferable, and acetic acid and methanesulfonic acid are more preferable. In addition, these acids may be used alone or as a mixture.

(b) The amino compound to be used in the production method of the invention means an aromatic amino compound which may have a substituent group, and monocyclic and condensed ring compounds are also included therein. Heterocyclic amino groups are particularly preferable, and more preferred are nitrogen-containing 5- to 7-membered heterocyclic amino compounds. Most preferred is a 5-aminopyrazole derivative or a salt thereof, and particularly preferred is a 5-aminopyrazole derivative represented by the general formula (4) or a salt thereof. $R^{12}$ in the general formula (4) is preferably an attractive group having a Hammett substituent constant σp value of 0.20 or more. $R^{12}$ is more preferably a cyano group, a carbamoyl group, an alkoxycarbonyl group, an alkylsulfonyl group or a phenylsulfonyl group, $R^{12}$ is most preferably a cyano group.

(c) Weight ratio of the acid based on the amino compound is from 1 to 100 times, more preferably from 2 to 50 times, most preferably from 3 to 25 times.

(d) Amount of the diazotization agent based on the amino compound, in molar ratio, is from 1.0 to 20 times, more preferably from 1.0 to 10 times, further preferably from 1.0 to 5 times.

(e) It is desirable that mixing of the diazotization agent, acid and amino compound is carried out at 20˚C or less, more preferably at 15˚C or less, further preferably 12˚C or less.

(f) Preferred examples of the diazotization agent include nitrosylsulfuric acid and sodium nitrite, most preferably nitrosylsulfuric acid.

(g) Preferred among the compounds of the general formula (1) to be used at the step (b) in the production method of the invention are those represented by the general formula (2). The suffix n is most preferably 2 among the range of from 1 to 3. Preferred among the compounds of the general formula (2) are those represented by the general formula (3) .

(h) In the production method of the invention, the step (b) is preferably followed by a heating/stirring step (c).

The following describes examples of the invention, but the invention is not limited to these examples.

<Synthesis of azo compound by steps (a) and (b)>

[Example 1]

Synthesis of azo compound 1

Scheme 1

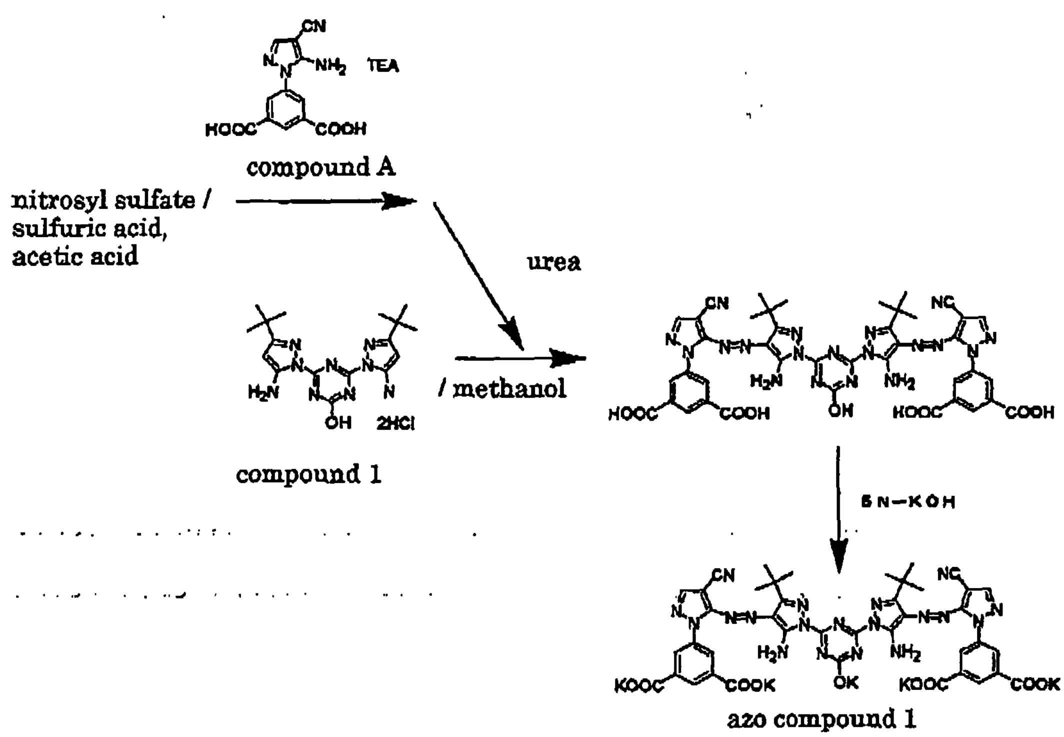

[Synthesis of compound 1]

A 25.5 g portion of sodium bicarbonate and 150 ml of ion exchange water were heated to 40˚C, and 25.0 g of cyanuric chloride was added thereto by dividing into 5 portions for every 10 minutes and stirred for 1 hour. The resulting solution was added dropwise to a mixed liquid (8˚C) of 52.8 ml of hydrazine and 47 ml of ion exchange water in such a manner that the liquid temperature did not exceed 10˚C. The liquid temperature was increased to 50˚C and stirred for 30 minutes. The thus precipitated crystals were collected by filtration to obtain 23.4 g of white crystals. The yield was 94.7%.

A 35.0 g portion of the aforementioned white crystals were suspended in 420 ml of ethylene glycol and stirred at a liquid temperature of 50˚C. A 59 ml portion of concentrated hydrochloric acid and subsequent 60.1 g of pivaloyl acetonitrile were added thereto and stirred at 50˚C for 10 hours. A 95 ml portion of concentrated hydrochloric acid and 145 ml of methanol were further added thereto and again stirred for 8 hours. After cooling down to room temperature, the thus precipitated crystals were collected by filtration to obtain 81.6 g of the compound 1. The yield was 94.2%.

(Synthesis of compound A)

A 36.2 g portion of 5-aminoisophthalic acid was suspended and dispersed in 200 ml of ion exchange water, and 36.8 ml of 95% sulfuric acid was added dropwise thereto. This was stirred at a liquid temperature of 25˚C for 20 minutes and then cooled until the liquid temperature became 2˚C. A 21.2 ml portion of aqueous solution of 13.9 g sodium nitrite was added thereto by controlling the upper limit of the liquid temperature at 5˚C. Subsequently, this was stirred at a liquid temperature of 10˚C for 1 hour (reaction liquid A). The reaction liquid A was added to 130 ml of separately prepared 75.6 g sodium sulfite aqueous solution (liquid temperature 20˚C), and the mixture was heated until the liquid temperature became 70˚C and stirred at this temperature for 1.5 hours. Thereafter, 33.8 ml of 95% sulfuric acid added dropwise thereto at a liquid temperature of 75˚C or less, and the mixture was stirred at a liquid temperature of 85˚C for 3 hours. After cooling this to a liquid temperature of 25˚C, the thus precipitated white crystals were collected by suction filtration, washed with 300 ml of ion exchange water and then with 200 ml of isopropanol and dried at 75˚C. The yield was 50.6 g (103.1%). A 15.5 g portion of the white crystals was suspended in 49.4 g of methanol, and then triethylamine was added thereto until white crystals were completely dissolved (18.3 g was used). A 8.1 g portion of ethoxymethylidene malononitrile was added thereto a liquid temperature of 30˚C, and the mixture was heated to a liquid temperature of 40˚C and then stirred for 1 hour. After heating to a liquid temperature of 50˚C, 5.1 g of hydrochloric acid was added dropwise thereto, and the mixture was heated to the reflux temperature. After 1 hour of stirring, this was cooled to a liquid temperature of 25˚C, and the thus precipitated pale yellow crystals were collected by suction filtration. The crystals were washed with 33.2 g of isopropanol and then dried at 75˚C to obtain the compoundA. The yieldwas 17.7 g (70.9%).

[Synthesis 3]

(Synthesis of azo compound 1)

A 23.8 g portion of 95% sulfuric acid was stirred at a liquid temperature of 10˚C, 61.1 g of acetic acid was added thereto, and the liquid temperature was kept at 7˚C. A 6.4 ml portion of 40% nitrosyl sulfate (mfd. by Aldrich) was added dropwise thereto. A 12.9 g portion of the compound A was added in portions thereto, and the mixture was stirred at a liquid temperature of 10˚C for 1 hour. A 0.7 g portion of urea was added to this reaction liquid, and the stirring was continued for 1 hour (reaction liquid B). At a liquid temperature of 10˚C or less, the reaction liquid B was added dropwise to 148. 2 g of separately prepared methanol solution of 7.5 g of the compound 1 (liquid temperature 4˚C). After the dropwise addition, this was stirred at a liquid temperature of 10˚C for 15 minutes and then heated to a liquid temperature of 20˚C. After stirring at this temperature for 1.5 hours, the thus precipitated yellow crystals were collected by suction filtration. After washing with 126.4 g of methanol, all of the crystals were suspended in 148.2 g of methanol. After heating to the reflux temperature, this was refluxed for 1 hour and then cooled to a liquid temperature of 30˚C. The yellow crystals were collected by suction filtration, and then washed with 63.2 g of methanol, 160 g of ion exchange water and then 63.2 g of methanol in that order. The crystals were dried at 75˚C. Yield 13.8 g (87.0%). A 10.0 g portion of the yellow crystals were suspended and dispersed in 47 g of ion exchange water, and 11 ml of 5 mol/l potassium hydroxide aqueous solution was added dropwise thereto at room temperature to adjust the pH to 7.5. This solution was heated to a liquid temperature of 50˚C, mixed with 223 ml of isopropanol and then cooled to a liquid temperature of 30˚C. The thus precipitated yellow crystals were collected by suction filtration and washed with 223 ml of isopropanol . After drying at 75˚C, 11. 6 g of the azo compound 1 was obtained (yield 96. 4%) . λmax: 436.2 nm ($H_2O$), ε: 33800.

[Example 2]

Synthesis of azo compound 16

Scheme 2

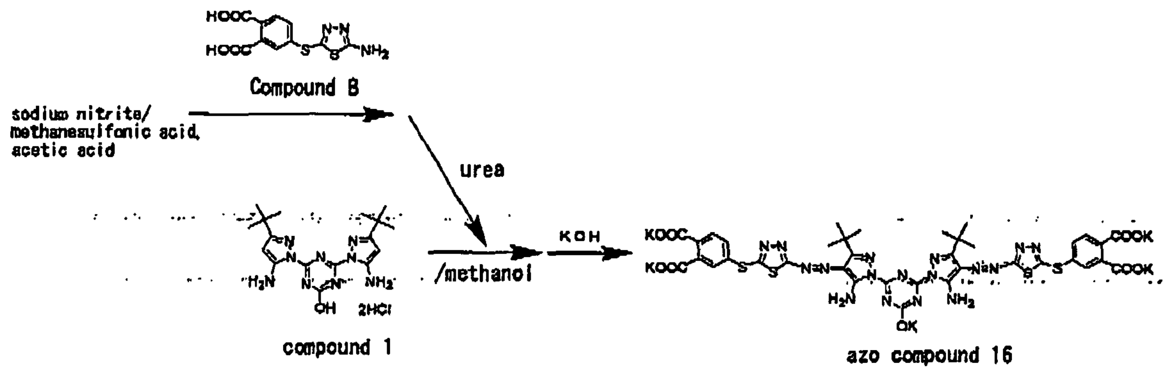


(Synthesis of compound B)

After dissolving 251.3 g of 4-nitrophthalonitrile (mfd. by Tokyo Kasei) in 2,500 ml of dimethyl sulfoxide, 290.0 g of 2-amino-5-mercapto-1,3,4-thiadiazole (mfd. by Wako Pure Chemical Industries) and 220.7 g of potassium carbonate were added thereto in that order. This was heated to a liquid temperature of 40˚C and then stirred for 3.5 hours. This reaction liquid was transferred to 15,000 ml of ion exchange water, and the thus precipitated crystals were collected by filtration. Subsequently, the crystals were suspended and dispersed in a mixed solvent consisting of 900 ml isopropanol and 300 ml methanol and stirred at room temperature for 1.5 hours. The crystals were collected by filtration, washed with 500 ml of isopropanol and then dried. Yield 357.4 g (95%).

A 100.0 g portion of the crystals were added in portions to a mixed liquid consisting of 86.7 ml of 95% sulfuric acid and 34.7 ml of ion exchange water and having a liquid temperature of 75˚C, and the mixture was heated to a liquid temperature of 120˚C. This was stirred for 1 hour and then cooled to room temperature, and 200 ml of acetone was added thereto and suspended and dispersed therein. The crystals were collected by filtration, washed with acetone and dried, thereby obtaining 179.35 g the compound B (yield 117.5%).

[Synthesis 5]

(Synthesis of azo compound 16)

A 32.7 g portion of the compound B was completely dissolved at room temperature in a mixed liquid consisting of 71.4 ml of methanesulfonic acid, 85.6 ml of acetic acid and 128.4 ml of propionic acid. After cooling to a liquid temperature of 4˚C, 16 ml of an 8.0 g sodium nitrite aqueous solution was added dropwise thereto, and the mixture was stirred a liquid temperature of 5˚C or less for 1.5 hours (reaction liquid C). By spending 0. 5 hour, the reaction liquid C was added dropwise to a separately prepared 440 ml ethylene glycol/220 ml methanol mixed solution of 22.2 g of the compound 1 (liquid temperature -8˚C or less). This dispersion liquid was transferred to 4, 200 ml of acetonitrile, and the stirring was stopped to effect settling of the precipitate. After discarding the supernatant, the residue was mixed with 2,500 ml of acetonitrile and stirred for 15 minutes, and then the precipitate was settled. The supernatant was discarded, and then the precipitate was collected by filtration and dispersed in 900 ml of ion exchange water. After stirring at room temperature for 2 hours, the precipitate was collected by filtration and washed with ion exchange water. After drying, 43.9 g of yellow crystals were obtained (yield 88.0%). $\lambda$max: 451.7 nm ($H_2O$), $\varepsilon$: 59400.

[Example 3]

Synthesis of azo compound 20

Scheme 3

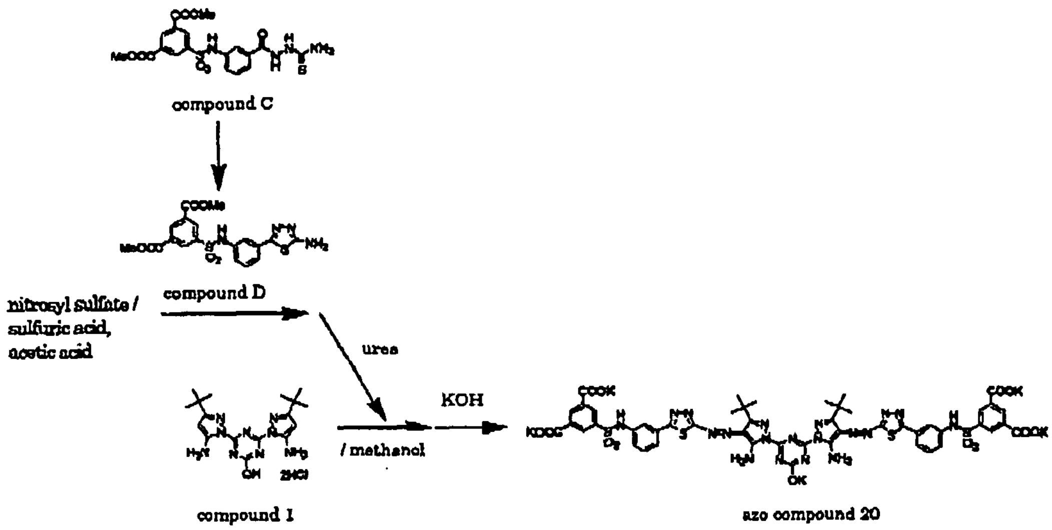


(Synthesis of compound C)

A 800 g portion of dimethyl 5-sulfoisophthalate sodium was dissolved in 800 ml of dimethylformamide, 2,400 ml of acetonitrile was added thereto, and then 800 ml of phosphorus oxychloride was added dropwise thereto. This was stirred at a liquid temperature of 60˚C for 3.5 hours and then cooled to 45˚C. The reaction liquid was poured inter 12 liters of ice water and stirred for 1 hour. The resulting crystals were collected by filtration, washed with 12 liters of ion exchange water and then air-dried (yield 758.3g, 95.9%). A 213.4 g portion of the crystals were added to 2, 500 ml methanol solution of 100.0 g m-aminobenzoic acid, and the liquid temperature was kept at 10˚C. A 59.0 ml portion of pyridine was added thereto, and the liquid temperature was increased to 23˚C. After stirring at this temperature for 1 hour, the thus precipitated crystals were collected by filtration and washed twice with 2, 500 ml of ion exchange water. After drying at 70˚C, 246.1 g of white crystals were obtained (yield 85.7%). A 196.7 g portion of the white crystals were added to 700 ml of ethyl acetate and heated at a liquid temperature of 50˚C. A 47.2 ml portion of thionyl chloride was added dropwise thereto, and the mixture was stirred at a liquid temperature of 60˚C for 1 hour. This was heated under reflux for 1 hour. This was cooled to a liquid temperature of 20˚C and transferred to 600 ml of separately prepared acetonitrile having a liquid temperature of 5˚C. A 91.1 g portion of thiosemicarbazide was added to this reaction liquid, and the mixture was stirred at a liquid temperature of 7˚c for 0.5 hour. A 800 ml portion of cool water was poured into this at the same temperature, and the mixture was warmed up to room temperature and then stirred for 1 hour. The thus precipitated crystals were collected by filtration and washed twice with 1,000 ml of ion exchange water and then with 250 ml of- cold acetonitrile. After drying the crystals, 223.0 g of the compound C was obtained (yield 95.6%).

[Synthesis 7]

(Synthesis of azo compound 20)

A 137. 8 g portion of the compound C was added in portions to 275 ml of 95% sulfuric acid which had been cooled to 10˚c, and the mixture was warmed up to a liquid temperature of 20˚C and then stirred for 3 hours. After cooling to a liquid temperature of 4˚C, 82.6 ml of acetic acid was gradually added thereto, and the liquid temperature was kept at 12˚C. A 65 ml portion of nitrosyl sulfate (mfd. by Aldrich) was added dropwise to this solution. After 3 hours of stirring, 21.3 g of urea was added thereto. After 2 hours of stirring, this was added dropwise to separately prepared 1, 300 ml methanol dispersion of 52.4 g of the compound 1 (liquid temperature 4˚C). This was stirred at a liquid temperature of 4˚C for 15 minutes and then warmed up to room temperature. The thus precipitated crystals were collected by filtration, dispersed in 1,000 ml of ion exchange water and then stirred at a liquid temperature of 85˚C for 1 hour. After cooling to room temperature, the crystals were collected by filtration and washed with 1,000 ml of ion exchange water and then with 500 ml of methanol. By drying at 75˚C, 137.8 g of yellow powder was obtained (yield 81.6%).

Next, 43.5 g of this yellow powder was dispersed in 87 ml of methanol, 87 ml of isopropanol and 44 ml of ion exchange water, and 44 ml of 2 mol/l potassium hydroxide aqueous solution and 20 ml of ion exchange water were added thereto at room temperature. Subsequently, while keeping the reaction liquid at pH 13.6 or less, 40 ml of 2 mol/l potassium hydroxide aqueous solution was added dropwise thereto. A 448 ml portion of methanol was added dropwise to the reaction liquid, and the thus precipitated crystals were collected by filtration and then washed with 200 ml of methanol. The crystals dried at 75˚C were dissolved in 505 ml of ion exchange water, and the solution was adjusted to pH 8.5 with 40 ml of 1 mol/l hydrochloric acid aqueous solution. Subsequently, 1089 ml of methanol and then 817 ml of isopropanol were added dropwise thereto, and the thus precipitated crystals were collected by filtration and then washed with 300 ml of isopropanol. By drying at 75˚C, 40.0 g of the azo compound 20 was obtained (yield 79.3%). λmax: 456.7 nm ($H_2O$), ε: 59900.

[Example 4]

The reaction of Synthesis 3 was carried out, except that the amount of 95% sulfuric acid was changed to 16.9 g.

[Examples 5 to 25]

Various azo compounds were produced in the same manner as in Synthesis 3 except that Compound A (amino compound) to be used in Synthesis 3, the amount of Compound A to be used, Compound 1 (compound represented by the general formula (1)) and the amount of Compound a to be used were changed as set forth in Tables 1-to 4.

[Table 1]

| | Amino compound | | Compound represented by the general formula (1) | | Azo compound produced |
|---|---|---|---|---|---|
| | Structure | Amount used (g) | Structure | Amount used (g) | |
| Example 5 | 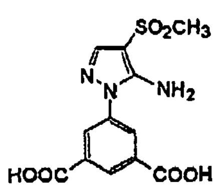 | 11.2 | 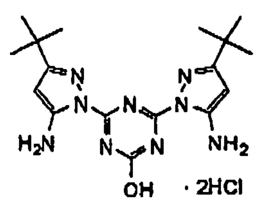 | 7.5 | Azo compound 2 |
| Example 6 | 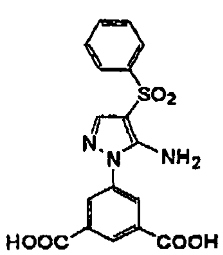 | 13.4 | 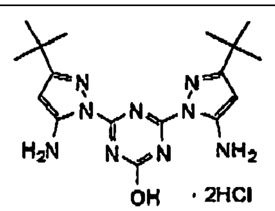 | 7.5 | Azo compound 3 |
| Example 7 | 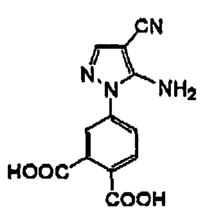 | 9.4 | 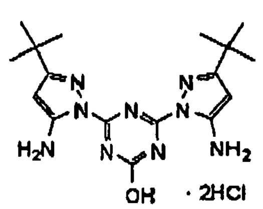 | 7.5 | Azo compound 4 |
| Example 8 | 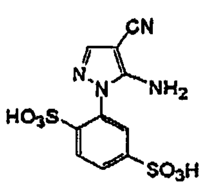 | 11.9 | 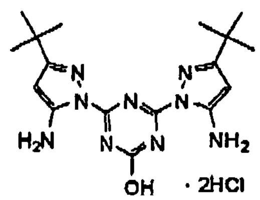 | 7.5 | Azo compound 5 |

(continued)

| | Amino compound | | Compound represented by the general formula (1) | | Azo compound produced |
|---|---|---|---|---|---|
| | Structure | Amount used (g) | Structure | Amount used (g) | |
| Example 9 | 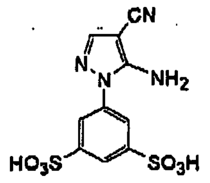 | 11.9 | 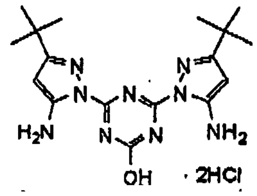 | 7.5 | Azo compound 6 |
| Example 10 | 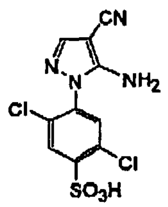 | 11.5 | 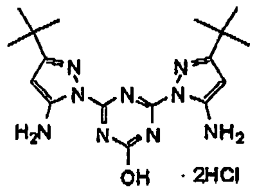 | 7.5 | Azo compound 7 |

[Table 2]

| | Amino compound | | Compound represented by the general formula (1) | | Azo compound produced |
|---|---|---|---|---|---|
| | Structure | Amount used Amount Structure | Structure | Amount used (g) | |
| Example 11 | 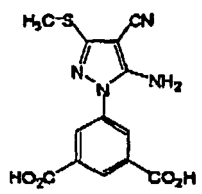 | 11.0 | 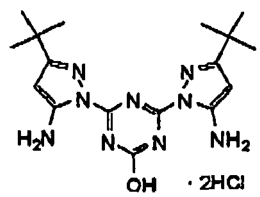 | 7.5 | Azo compound 8 |
| Example 12 | 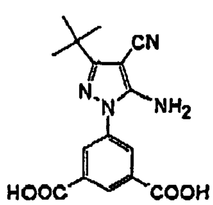 | 11.3 | 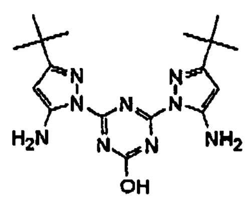 | 7.5 | Azo compound 9 |
| Example 13 | 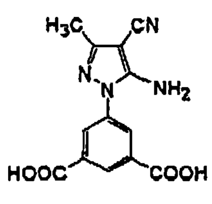 | 9.9 | 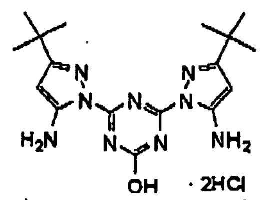 | 7.5 | Azo compound 10 |

(continued)

| | Amino compound | | Compound represented by the general formula (1) | | Azo compound produced |
|---|---|---|---|---|---|
| | Structure | Amount used Amount Structure | Structure | Amount used (g) | |
| Example 14 | 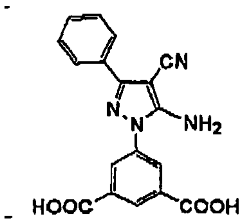 | 12.0 | 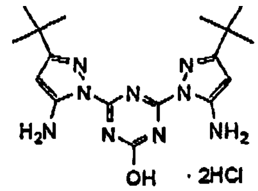 | 7.5 | Azo compound 11 |
| Example 15 | 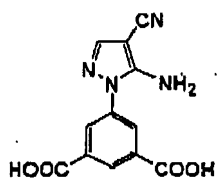 | 9.4 | 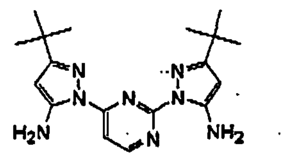 | 6.0 | Azo compound 12 |
| Example 16 | 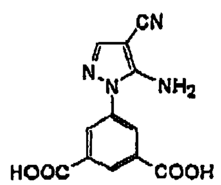 | 9.4 | 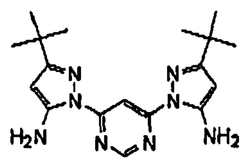 | 6.0 | Azo compound 13 |
| Example 17 | 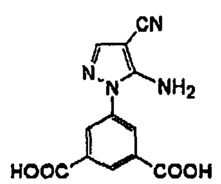 | 9.4 | 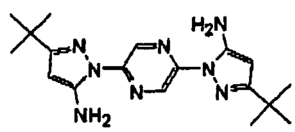 | 6.0 | Azo compound 14 |
| Example 18 | 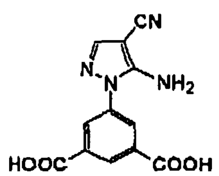 | 9.4 | 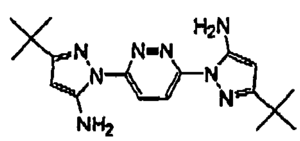 | 6.0 | Azo compound 15 |

[Table 3]

| | Amino compound | | compound represented by the general formula (1) | | Azo compound produced |
|---|---|---|---|---|---|
| | Structure | Amount used (g) | Structure | Amount used (g) | |
| Example 19 | 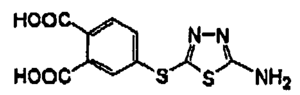 | 10.3 | 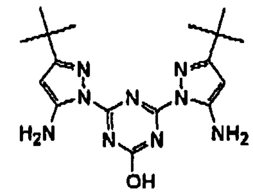 | 7.5 | Azo compound 17 |
| Example 20 | 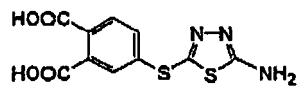 | 10.3 | 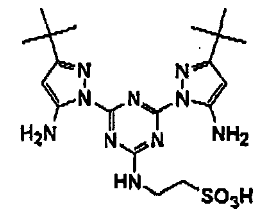 | 8.1 | Azo compound 18 |
| Example 21 | 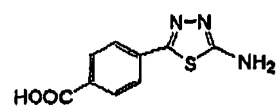 | 7.5 | 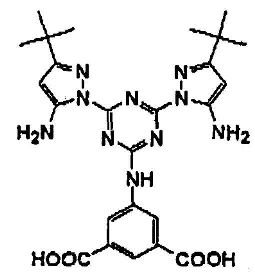 | 9.0 | AZO compound 19 |
| Example 22 | 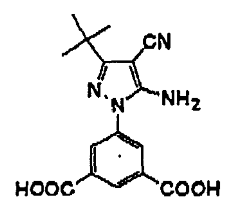 | 11.3 | 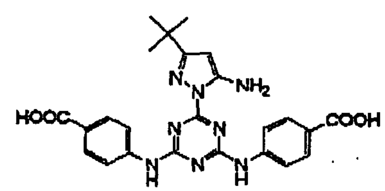 | 8.2 | Azo compound 21 |

[Table 4]

| | Amino compound | | Compound represented by the general formula (1) | | Azo compound produced |
|---|---|---|---|---|---|
| | Structure | Amount used (g) | Structure | Amount used (g) | |
| Example 23 | 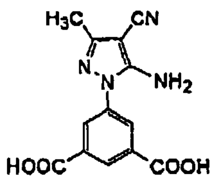 | 9.9 | 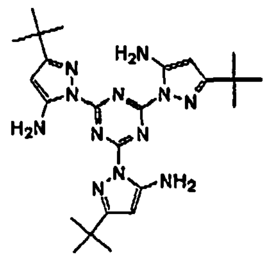 | 8.3 | Azo compound 22 |
| Example 24 | 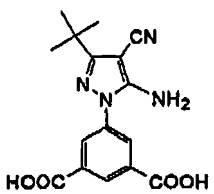 | 11.3 | 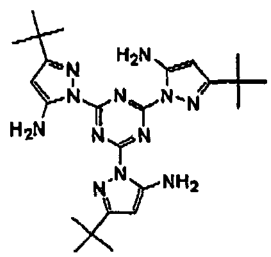 | 8.3 | Azo compound 23 |
| Example 25 | 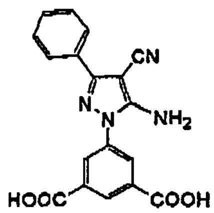 | 12.0 | 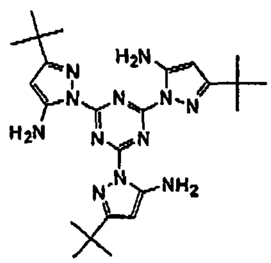 | 8.3 | Azo compound 24 |

<Synthesis of azo compound by the steps (a), (b) and (c)>

[Example 26]

(Systhesis of azo compond, including the step (c))

Scheme 4

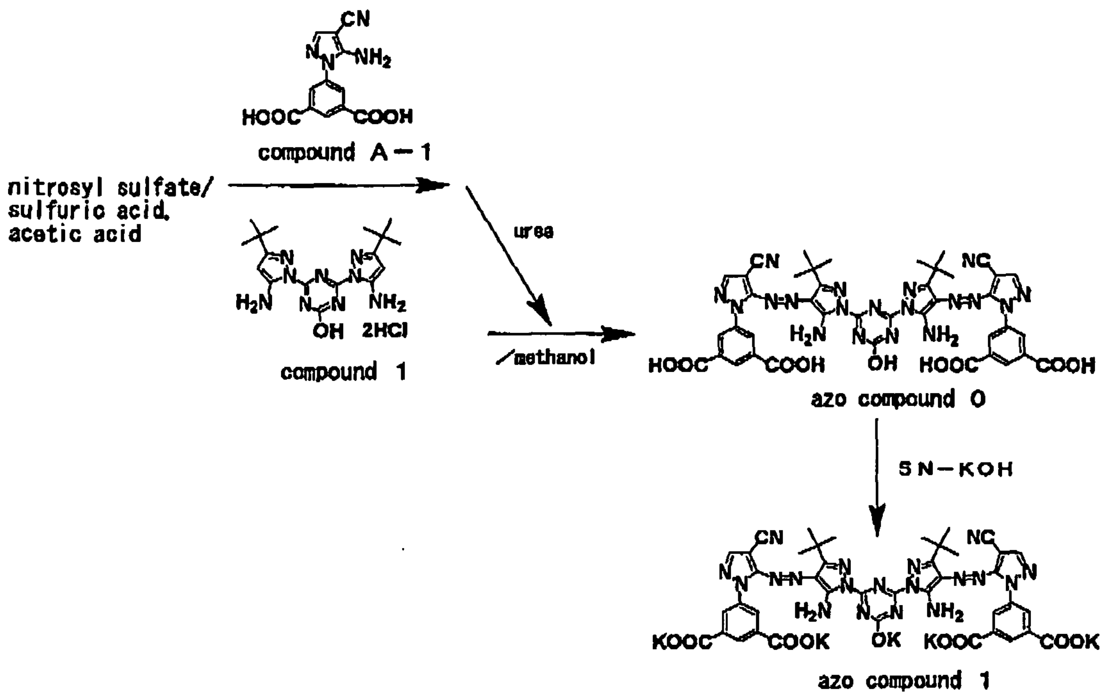


(Synthesis of azo compound 1)

9.2 g of a 95% sulfuric acid was stirred at an internal temperature of 10°C. To the sulfuric acid was then added 23.6 g of acetic acid. The internal temperature of the mixture was then kept at 10°C or less. To the mixture was then added dropwise 4.9 mL of a nitrosylsulfuric acid having a concentration of 40% by mass (produced by Aldrich Inc.). 7.3 g of Compound A-1 was then added by portions. The mixture was then stirred at an internal temperature of from 0°C to 5°C for 1.5 hours. To the reaction solution was then added 0.6 g of urea. The reaction solution was then further stirred for 0.5 hours (diazonium compound prepared solution). The diazonium compound prepared solution thus prepared was then added dropwise at an internal temperature of 20°C or less to a mixture (internal temperature: 20°C) of 68 ml of a methanol solution of 5.4 g of Compound 1 separately prepared with 5.7 ml of a methanol solution of 1.6 g of potassium hydroxide. After dropwise addition, the mixture was then heated to an internal temperature of 20°C. The mixture was stirred for 1 hour, and then cooled to 10°C. To the reaction solution was then added at an internal temperature of 20°C or less 26.3 ml of a methanol solution of 7.4 g of potassium hydroxide separately prepared and crystallized. The reaction solution was then heated to an internal temperature of 50°C. The reaction solution was then stirred while being kept at the same temperature for 1 hour. The pH value of the reaction solution was 0.6. Thereafter, the reaction solution was cooled to 30°C or less in 1 hour. The yellowish crystal (Azo Compound 0) thus produced was suction-filtered through a filter paper having a thickness of 70 mm (Type 2) (produced by ADVANTEC CO., LTD.). The time required for filtration was 30 seconds. The yield of Azo Compound 0 was 93.2% (HPLC area (%)).

The crystal thus obtained was suspended in 140 ml of deionized water. The suspension was heated to 70°C where it was then stirred for 1 hour. The suspension was then suction-filtered to obtain 10.8 g of the product (yield: 94.0%). The product was then processed in the same manner as in Synthesis 3 to obtainAzo Compound 1. When the step (c) was not effected, the filtration required 431 seconds. As can be seen in the results, the effect of the step (c) is made obvious.

[Example 27]

(Synthesis of Azo Compound 1 in the case where the state of salts as starting material differ)

Scheme 4

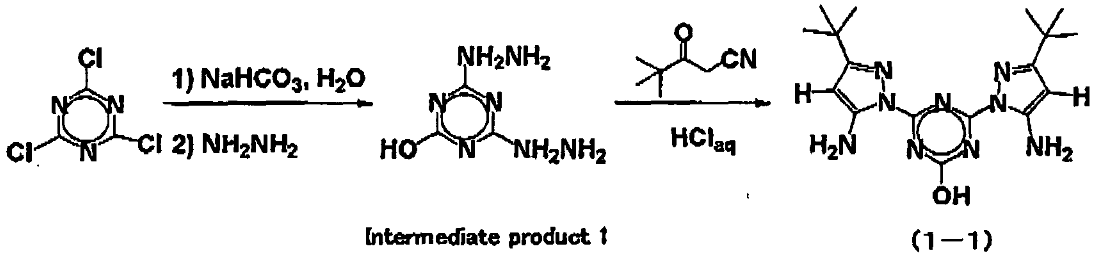


Intermediate product 1

(1−1)

(Synthesis of Compound 1-1)

To a mixture of 20.0 g of Intermediate Product 1 synthesized according to the method disclosed in JP-A-2006-57076 and 34.9 g of pivaloyl acetonitrile was added 500 ml of water. The mixture was then stirred at room temperature (internal temperature : 24˚C; pH 5.08). To the reaction mixture was then added 56 ml of a 1 M aqueous solution of hydrochloric acid (internal temperature: 25˚C; pH during charging: 2.81). The reaction mixture was then heated to an internal temperature of 60˚C with stirring for 8 hours (internal temperature: 50˚C; pH 1.20). Thereafter, to the reaction mixture was slowly added dropwise 27 ml to 28 ml of a 8M aqueous solution of potassium hydroxide. As a result, the reaction system became a uniform system (internal temperature: 50˚c pH 8.7 - 8.9). The reaction mixture was further heated to an internal temperature of 50˚C with stirring for 30 minutes . Thereafter, to the reaction mixture was slowly added dropwise 13 . 5 ml of a 12 M aqueous solution of hydrochloric acid. As a result, crystallization occurred (internal temperature: 50˚C; pH 6.5 - 6.7). The crystal thus produced was filtered, washed with 400 mL of water, and then dried to obtain 40.2 g of Compound 1-1 (isolation yield: 85.1%; HPLC purity: 97.1%).

Scheme 5

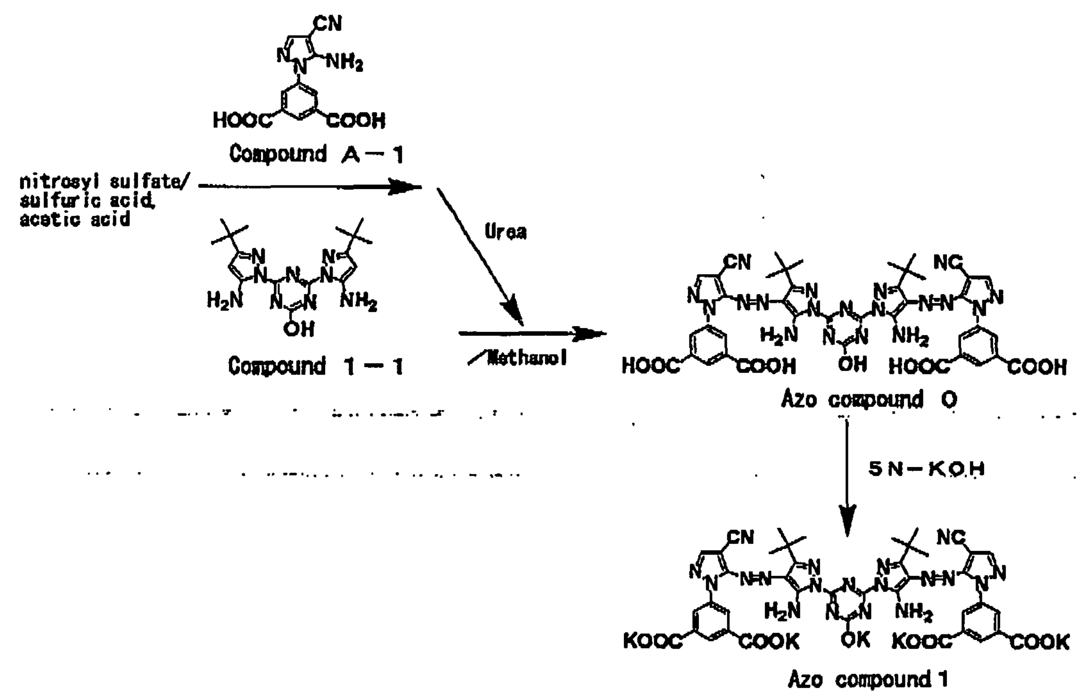


Compound A − 1

Compound 1 − 1

Azo compound O

Azo compound 1

(Synthesis of Azo Compound 1) Synthesis of Azo Compound 1 from Compound A-1 instead of Compound A and Compound 1-1 instead of Compound 1

9.2 g of a 95% sulfuric acid was stirred at an internal temperature of 10˚C. To the sulfuric acid was then added 23. 6 g of acetic acid. The internal temperature of the mixture was then kept at 10˚C or less. To the mixture was then

added dropwise 4.9 mL of a nitrosylsulfuric acid having a concentration of 40% by mass (produced by Aldrich Inc.). 7.3 g of Compound A-1 was then added by portions. The mixture was then stirred at an internal temperature of from 0˚C to 5˚C for 1.5 hours. To the reaction solution was then added 0. 6 g of urea. The reaction solution was then further stirred for 0.5 hours (diazonium compound prepared solution). The diazonium compound prepared solution thus prepared was then added dropwise at an internal temperature of 20˚C or less to 73.5 ml of a methanol solution of 4.52 g of Compound 1-1 separately prepared. After dropwise addition, the mixture was then heated to an internal temperature of 20˚C. Themixture was stirred for 1 hour, and then cooled to 10˚C. To the reaction solution was then added at an internal temperature of 20˚C or less 26.3 ml of a methanol solution of 7.4 g of potassiumhydroxide separately prepared and crystallized. The reaction solution was then heated to an internal temperature of 55˚C to 60˚C. The reaction solution was then stirred for 1 hour. Thereafter, the reaction solution was cooled to 30˚C or less in 1 hour. The yellowish crystal (Azo Compound 0) thus produced was suction-filtered through a filter paper having a thickness of 70 mm (Type 2) (produced by ADVANTEC CO., LTD.). The time required for filtration was 30 seconds. The crystal thus obtained was suspended in 130 ml of deionized water. The suspension was heated to 70˚C where it was then stirred for 1 hour. The suspension was then suction-filtered to obtain 11.3 g of the product (yield: 92%). The product was then processed in the same manner as in Synthesis Example 3 to obtain Azo Compound 1.

[Examples 28 and 29]

The synthesis procedure of the invention was followed except that Compound A-1 to be used in Example 26 and its amount, Compound 1 and its amount were changed to the staring materials corresponding to Azo Compounds 20 and 21 and the proportion set forth in Example 3 and Table 3.

(Comparative Example 1)

The reaction procedure of Example 3 was followed except that 95% sulfuric acid/acetic acid was changed to dilute hydrochloric acid and nitrosylsulfuric acid was changed to an aqueous solution of sodium nitrite. After coupling, Azo Compound 1 was not produced.

[Table 5]

| | Azo compound | n value in the general formula (1) | Step (c) effected ? | Acid used at the step (a) (weight ratio) | Acidity function $H_0$ (25˚C) | Diazotization agent | % Isolation yield of azo compound | Absorption characteristics λmax; ε λmax ; ε |
|---|---|---|---|---|---|---|---|---|
| Example 1 | AzoCompound 1 | 2 | No | Sulfuric acid/ acetic acid 1.0/2.6 (w/w) | -1.30 | Nitrosyl sulfuric acid | 96.4 | 436.2 nm ε : 33,800 |
| Example 2 | AzoCompound 16 | 2 | No | Methane sulfonic acid/ acetic acid/ propionic acid 1.00/0.85/1.2 (w/w/w) | -1.40 | Sodium nitrite | 88.0 | 451.7 nm ε : 59,400 |
| Example 3 | AzoCompound 20 | 2 | No | Sulfuric acid/ acetic acid 1.0/1.7 (w/w) | -2.00 | Nitrosyl sulfuric acid | 79.3 | 456.7 nm ε : 59,900 |
| Example 4 | AzoCompound 1 | 2 | No | Sulfuric acid/ acetic acid 1.0/3.7 {w/w} | -1.07 | Nitrosyl sulfuric acid | 75.4 | 435.5 nm ε : 31,400 |
| Example 5 | AzoCompound 2 | 2 | No | Sulfuric acid/ acetic acid 1.0/2.6 (w/w) | -1.30 | Nitrosyl sulfuric acid | 89.8 | 435.5 nm ε : 31,400 |
| Example 6 | AzoCompound 3 | 2 | No | Sulfuric acid/ acetic acid 1.0/2.6 (w/w) | -1.30 | Nitrosyl sulfuric acid | 83.6 | 442.9 nm ε : 34,300 |
| Example 7 | AzoCompound 4 | 2 | No | Sulfuric acid/ acetic acid 1.0/2.6 (w/w) | -1.30 | Nitrosyl sulfuric acid | 92.0 | 444.9 nm ε : 39,300 |
| Example 8 | Azo compound 5 | 2 | No | Sulfuric acid/ acetic acid 1.0/2.6 (w/w) | -1.30 | Nitrosyl sulfuric acid | 91.3 | 444.6 nm ε : 37,600 |
| Example 9 | AzoCompound 6 | 2 | No | Sulfuric acid/ acetic acid 1.0/2.6 (w/w) | -1.30 | Nitrosyl sulfuric acid | 89.6 | 442.6 nm ε : 34,400 |

(continued)

| | Azo compound | n value in the general formula (1) | Step (c) effected ? | Acid used at the step (a) (weight ratio) | Acidity function $H_0$ (25°C) | Diazotization agent | % Isolation yield of azo compound | Absorption characteristics λmax; ε λmax ; ε |
|---|---|---|---|---|---|---|---|---|
| Example 10 | Azo Compound 7 | 2 | No | Sulfuric acid/ acetic acid 1.0/2.6 (w/w) | -1.30 | Nitrosyl sulfuric acid | 83.0 | 437.0 nm ε : 29,800 |
| Example 11 | Azo Compound 8 | 2 | No | Sulfuric acid/ acetic acid 1.0/2.6 (w/w) | -1.30 | Nitrosyl sulfuric acid | 88.0 | 437.3 nm ε : 31,800 |

[Table 6]

| | Azo compound | n value in the general formula (1) | Step (c) effected ? | Acid used at the step (a) (weight ratio) | Acidity function $H_0$ (25°C) | Diazotization agent | % Isolation yield of azo compound | Absorption characteristics λmax ; ε λmax ; ε |
|---|---|---|---|---|---|---|---|---|
| Example 12 | AzoCompound 9 | 2 | No | Sulfuric acid/ acetic acid 1.0/2.6 (w/w) | -1.30 | Nitrosyl sulfuric acid | 90.3 | 449.0 nm e: 36,600 |
| Example 13 | AzoCompound 10 | 2 | No | Sulfuric acid/ acetic acid 1.0/2.6 (w/w) | -1.30 | Nitrosyl sulfuric acid | 91.9 | 434.3 nm e: 35,000 |
| Example 14 | AzoCompound 11 | 2 | No | Sulfuric acid/ acetic acid 1.0/2.6 (w/w) | -1.30 | Nitrosyl sulfuric acid | 86.9 | 435.0 nm ε: 36,000 |
| Example 15 | AzoCompound 12 | 2 | No | Sulfuric acid/ acetic acid 1.0/2.6 (w/w) | -1.30 | Nitrosyl sulfuric acid | 93.8 | 430.6 nm ε: 32,400 |
| Example 16 | AzoCompound 13 | 2 | No | Sulfuric acid/ acetic acid 1.0/2.6 (w/w) | -1.30 | Nitrosyl sulfuric acid | 78.0 | 437.8 nm ε: 38,000 |
| Example 19 | AzoCompound 17 | 2 | No | Sulfuric acid/ acetic acid 1.0/2.6 (w/w) | -1.30 | Nitrosyl sulfuric acid | 80.6 | 451.8 nm ε: 57,000 |
| Example 20 | AzoCompound 18 | 2 | No | Sulfuric acid/ acetic acid 1.0/2.6 (w/w) | -1.30 | Nitrosyl sulfuric acid | 83.7 | 447.9 nm ε: 54,700 |
| Example 21 | AzoCompound 19 | 2 | No | Sulfuric acid/ acetic acid 1.0/2.6 (w/w) | -1.30 | Nitrosyl sulfuric acid | 77.8 | 438.7 nm ε: 55,500 |
| Example 22 | AzoCompound 21 | 1 | No | sulfuric acid/ acetic acid 1.0/2.6 (w/w) | -1.30 | Nitrosyl sulfuric acid | 82.0 | 436.9 nm ε: 19,400 |

**[Table 7]**

| | Azo compound | n value in the general formula (1) | Step (c) effected ? | Acid used at the step (a) (weight ratio) | Acidity function $H_G$ (25°C) | Diazotization agent | % Isolation yield of azo compound | Absorption characteristics λmax, ε |
|---|---|---|---|---|---|---|---|---|
| Example 23 | Azo Compound 22 | 3 | No | Sulfuric acid/ acetic acid 1.0/2.6 (w/w) | -1.30 | Nitrosyl sulfuric acid | 73.4 | 418.2 nm ε: 42,400 |
| Example 24 | Azo Compound 23 | 3 | No | Sulfuric acid/ acetic acid 1.0/2.6 (w/w) | -1.30 | Nitrosyl sulfuric acid | 81.1 | 433.3 nm ε: 44,800 |
| Example 25 | Azo Compound 24 | 3 | No | Sulfuric acid/ acetic acid 1.0/2.6 (w/w) | -1.30 | Nitrosyl sulfuric acid | 84.1 | 444.0 nm ε: 39,100 |
| Example 26 | Azo Compound 1 | 2 | Yes | Sulfuric acid/ acetic acid 1.0/2.6 (w/w) | -1.30 | Nitrosyl sulfuric acid | 88.0 | 435.5 nm ε: 32,500 |
| Example 27 | Azo Compound 1 | 2 | Yes | Sulfuric acid/ acetic acid 1.0/2.6 (w/w) | -1.30 | Nitrosyl sulfuric acid | 92.0 | 435.7 nm ε: 31,000 |
| Example 28 | Azo Compound 21 | 1 | Yes | Sulfuric acid/ acetic acid 1.0/2.6 (w/w) | -1.30 | Nitrosyl sulfuric acid | 87.7 | 437.3 nm ε : 19,100 |
| Example 29 | Azo Compound 22 | 3 | Yes | Sulfuric acid/ acetic acid 1.0/2.6 (w/w) | -1.30 | Nitrosyl sulfuric acid | 90.4 | 418.0 nm ε: 42,800 |
| Comparative Example 1 | Azo Compound 1 | 2 | No | 12% hydrochloric acid | -0.80 | Sodium nitrite | 0 | |

As can be seen in these tables, the inventive examples provide a high yield. Further, when the step (c) is included, the filtration time can be remarkably reduced.

According to the invention, it can provide methods for producing azo-compounds inexpensively with high yield, which are useful in the industry, agriculture, medical treatment, science and the like respective fields.

## Claims

1. A method for producing an azo derivative, comprising:

   (a) a step for allowing a diazotization agent, an acid or mixed acid having a Hammett acidity function Ho of -1.00 or less and an amino compound to undergo reaction; and
   (b) a step for mixing a diazonium compound prepared solution obtained in the step (a) with a compound represented by general formula (1):

   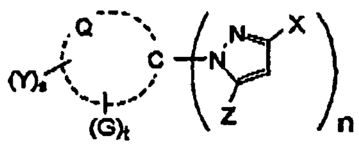 (1)

   wherein X each independently represents a hydrogen atom or a substituent group, wherein this substituent group may further have a substituent group,
   Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group,
   2 represents -OM or $-NR^5R^6$, wherein M represents a hydrogen atom or a metal ion; $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group,
   G represents a hydrogen atom or a halogen atom,
   Q is an atomic group which constitutes a nitrogen-containing heterocyclic ring together with the carbon atom directly bonding to the pyrazole, and
   n, s and t are integers which satisfy the relations of $1 \leq n \leq 3$, $0 \leq s \leq 2$, $0 \leq t \leq 1$ and $n + s + t = 3$.

2. The method for producing an azo compound described in claim 1,
   wherein in the general formula (1), the nitrogen-containing heterocyclic ring formed by Q is a 5- or 6-membered aromatic nitrogen-containing heterocyclic ring.

3. The method for producing an azo derivative described in claim 1 or 2,
   wherein the general formula (1) is general formula (2) :

   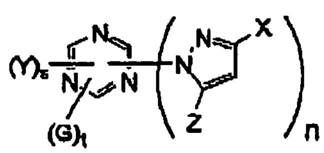 (2)

   wherein X each independently represents a hydrogen atom or a substituent group, wherein this substituent group may further have a substituent group,
   Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group,
   Z represents -OM or $-NR^5R^6$, wherein M represents a hydrogen atom or a metal ion; $R^5$ and $R^6$ each independently represents a hydrogen atom, an alkyl group, an alkenyl group, an alkynyl group, an aralkyl group, an aryl group, a

heterocyclic group, an alkylcarbonyl or arylcarbonyl group or an alkylsulfonyl or arylsulfonyl group, and these groups may further have a substituent group,
G represents a hydrogen atom or a halogen atom, and
n, s and t are integers which satisfy the relations of $1 \leq n \leq 3$, $0 \leq s \leq 2$, $0 \leq t \leq 1$ and $n + s + t = 3$.

**4.** The method for producing an azo compound described in any one of claims 1 to 3,
wherein in the general formula (1) or (2), n is 2 or 3.

**5.** The method for producing an azo derivative described in any one of claims 1 to 4,
wherein the general formula (2) is the general formula (3):

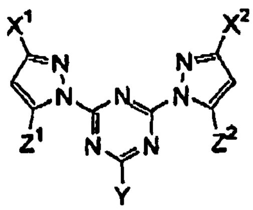

(3)

wherein $X^1$ and $x^2$ each independently represents a hydrogen atom or a substituent group, wherein this substituent group may further have a substituent group,
Y represents $-OR^1$, $-NR^2R^3$ or $-SR^4$, wherein $R^1$ represents a hydrogen atom, an alkali metal ion, an organic cation, an alkyl group, an alkenyl group, an alkynyl group, an aralkyl group, an aryl group or a heterocyclic group; $R^2$, $R^3$ and $R^4$ each independently represents a hydrogen atom, an alkyl group, an alkenyl group, an alkynyl group, an aralkyl group, an aryl group or a heterocyclic group; and these groups may further have a substituent group, and
$Z^1$ and $Z^2$ each independently represents -OM or $-NR^5R^6$,
wherein M represents a hydrogen atom or a metal ion, $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group, and these groups may further have a substituent group.

**6.** The method for producing an azo derivative described in any one of claims 1 to 5,
wherein the amino compound is an aminopyrazole derivative or a salt thereof.

**7.** The method for producing an azo derivative described in any one of claims 1 to 6,
wherein the aminopyrazole derivative is represented by a general formula (4)

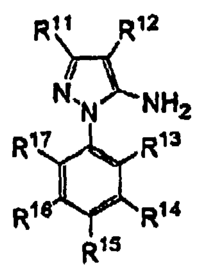

(4)

wherein $R^{11}$ represents a hydrogen atom, an alkyl group, an aryl group, an aryl group, an alkyloxy group, an aryloxy group, an alkylthio group, an arylthio group or a heterocyclic group; $R^{12}$ represents an hygrogen atom or a substituent group having a Hammett substituent constant σp value of 0.20 or more; and $R^{13}$, $R^{14}$, $R^{15}$, $R^{16}$ -and $R^{17}$ each independently represents a hydrogen atom or a substituent group, wherein two or more among $R^{13}$, $R^{14}$, $R^{15}$, $R^{16}$ and $R^{17}$ represent an ionic hydrophilic group or a monovalent group having an ionic hydrophilic group as its substituent group, excluding a case in which $R^{13}$ and $R^{16}$ are both sulfo group at the same time.

**8.** The method for producing an azo compound described in Claim 7,
wherein in the general formula (4), $R^{12}$ is a cyano group,- $SO_2CH_3$ or $-SO_2Ph$.

**9.** The method for producing an azo derivative described in claims 7 or 8, wherein $R^{12}$ in the general formula (4) is a cyano group.

**10.** The method for producing an azo compound described in any one of claims 1 to 9, wherein at the step (a), the diazotization agent is nitrosylsulfuric acid.

**11.** The method for producing an azo compound described in any one of claims 1 to 10, wherein at the (a), the acid is sulfuric acid, phosphoric acid or methanesulfonic acid and the mixed acid is a mixture of the acid and acetic acid.

**12.** The method for producing an azo compound described in any one of claims 1 to 11, further comprising a step (c) of stirring the mixed solution obtained at the step (b) under heating.

**13.** An azo derivative represented by general formula (5), which is obtainable by the method described in any one of claims 1 to 12:

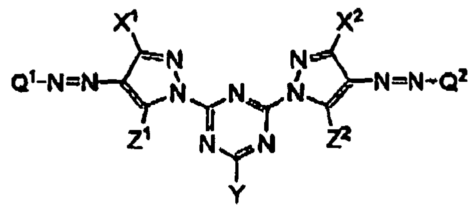

(5)

wherein $Q^1$ and $Q^2$ each independently represents an aromatic hydrocarbon ring group, a non-aromatic hydrocarbon ring group, an aromatic heterocyclic ring or a non-aromatic heterocyclic ring, which may have a substituent group, $X^1$ and $X^2$ each independently represents a hydrogen atom or a substituent group, wherein this substituent group may further have a substituent group,
Y represents -$OR^1$, wherein $R^1$ represents a hydrogen atom or a metal ion, and $Z^1$ and $Z^2$ each independently represents -OM or -$NR^5R^6$, wherein M represents a hydrogen atom or a metal ion and $R^5$ and $R^6$ each independently represents a hydrogen atom, an alkyl group, an alkenyl group, an alkynyl group, an aralkyl group, an aryl group, a heterocyclic group, an alkylcarbonyl or arylcarbonyl group or an alkylsulfonyl or arylsulfonyl group, and these groups may further have a substituent group.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 545491 A1
- EP 565165 A1
- JP 2006057076 A


### Non-patent literature cited in the description


- Shin Jikken Kagaku Koza (New Experimental Chemistry Course. Maruzen, vol. 14-III, 1516-1534
- Shin Jikken Kagaku Koza (New Experimental Chemistry Course. vol. 1, 213-216
- Lange's Handbook of Chemistry. McGraw-Hill, 1979
- Kagaku-no Ryoiki (Field of Chemistry. Nanko-do, 1979, 96-103